# EUROPEAN PATENT SPECIFICATION

(11) **EP 4 278 900 B1**
(45) Date of publication and mention of the grant of the patent: **24.07.2024**
(21) Application number: 22181886.7
(22) Date of filing: 29.06.2022
(51) Int. Cl.: A23K 10/10, A23K 50/40

(54) **METHOD FOR PREPARING A PET FOOD**
VERFAHREN ZUR HERSTELLUNG EINES HAUSTIERFUTTERMITTELS
PROCÉDÉ DE PRÉPARATION D'ALIMENTS POUR ANIMAUX

(43) Date of publication of application: 22.11.2023
(73) Proprietor: Paleo B.V., 3290 Diest (BE)
(72) Inventor: DE JONG, Andy, 3290 Diest (BE); SANCTORUM, Hermes, 3290 Diest (BE); LAUWERS, Elsa, 3290 Diest (BE)
(74) Representative: Nederlandsch Octrooibureau

(56) References cited:
- WO-A1-2013/010042
- WO-A1-2015/182791
- WO-A1-2022/144434
- CN-A- 113 549 561
- US-A- 4 089 983
- OCHIAI Y ET AL: "Effects of point mutations on the structural stability of tuna myoglobins", COMPARATIVE BIOCHEMISTRY AND PHYSIOLOGY PART B: BIOCHEMISTRY AND MOLECULAR BIOLOGY, ELSEVIER, AMSTERDAM, NL, vol. 153, no. 2, 1 June 2009 (2009-06-01), pages 223 - 228, XP026057662, ISSN: 1096-4959, [retrieved on 20090311], DOI: 10.1016/J.CBPB.2009.03.001

## Description

### Field

This inventions relates to a method for preparing a pet food, wherein the method comprises adding an isolated myoglobin, wherein the isolated myoglobin is a rat myoglobin, a rabbit myoglobin, a mouse myoglobin, a mammoth myoglobin or a tuna myoglobin.

### Background

The increasing knowledge about pet nutrition and food technology has enabled the industry to develop and diversify in terms of the type, taste, composition, shape of pet food. However, commercial pet food is highly processed, meaning the nutritional value together with the taste and texture may be lost during industrial production.

Against this background, there is an ongoing strive to develop meat substitutes as pet foods to lower their ecological footprint. For these types of pet foods, obtaining a taste and texture close to that of unprocessed meat is hard, yet detrimental to obtain a threshold level of food acceptance by the animals.

Hence, there is an ongoing need in the art for pet foods that mimick certain aspects, such as taste and texture, of meat, while being environmentally friendly.

### Description

### Method for preparing a pet food

In the first aspect of this invention, there is provided a method for preparing a pet food, wherein the method comprises adding an isolated myoglobin, wherein said isolated myoglobin is a rat myoglobin, a rabbit myoglobin, a mouse myoglobin, a mammoth myoglobin or a tuna myoglobin.

In an embodiment, the pet is a vertebrate. In an embodiment, the pet is a mammal, a bird, a fish, an amphibian, or a reptile. In an embodiment, the pet is a mammal. Mammals are a group of vertebrates constituting the class mammalia, characterized by the presence of mammary glands which in females produce milk for feeding (nursing) their young, a neocortex (a region of the brain), fur or hair, and three middle ear bones. In an embodiment, the pet is a carnivore or an omnivore, preferably a mammal. In a preferred embodiment, the pet may be a dog, a cat, a ferret, a fox, a bear, a wolf, a jaguar, a lion, a tiger, a snake, a piranha, or an alligator. In a preferred embodiment, the pet may be a dog or a cat.

In an embodiment, a rat is of any species in the genus Rattus. In more preferred embodiment, a rat is a black rat (Rattus rattus) or a bown rat (Rattus norvegicus). Different species in the genus Rattus may share the same myoglobin sequence.

In an embodiment, the pet food is a dry pet food, a semi-moist pet food, a wet pet food, or any combination of these types of pet food. A pet food may be formulated as a liquid, solid, or semi-solid pet food. By "dry pet food" is meant one that has a moisture content less than 15 percent by weight. By " semi-moist pet food" is meant one that has a moisture content between 55 to 65 percent by weight. By " wet type food" is meant one that has a moisture content between 75 to 85 percent by weight. Hereinafter, all percentages referred to are understood to be by weight unless specified otherwise and are based upon the weight of the final pet food product. Suitable examples of solid pet foods include kibbles, snacks, cell-based meats and meat substitutes, cultured meats and meat substitutes , and plant-based meats meat substitutes. Suitable examples of snacks include a protein bar, a dental snack, meat cubes or chew sticks. Such plant-based meats may comprise plant proteins such as soy proteins. Suitable examples of semi-moist type pet foods include chunks in gravy or jelly or meatloaf formats. Suitable examples of wet type or liquid pet food include soup.

In an embodiment, the pet food is a meat substitute. A meat substitute is per definition not meat, not natural meat, not genuine meat. A meat substitute may be considered as a non-naturally occurring food or edible product. It means that within the context of this invention, a meat substitute is not meat from or derived from rat, rabbit, mouse or tuna (or from or derived from mammoth if this animal would still exist which is not the case). A meat substitute is synonymous of a meat replica or a meat analogue product or a meat-like product. It is thus understood that cell-based meats, cultured meats and plant-based meats may be considered meat substitutes. Cell-based meat is normally cultivated directly from animal stem cells. Cultured meat is normally produced by in vitro cell cultures of animal cells, as a form of cellular agriculture. Plant-based meat is normally produced using plant and other non-animal products.

In an embodiment, the pet food is a meat substitute, wherein the meat substitute is a cell-based meat substitute, a cultured meat substitute or a plant-based meat substitute. Meat substitutes may be dry pet foods, semi-moist pet foods, wet pet foods or any combination of these types of pet foods. The inventors discovered that "meat experience" of a pet food comprising meat could be mimicked in a meat substitute by adding an isolated myoglobin as defined herein. Depending on the meat substitute envisaged, the skilled person would know which formulations are the most suitable.

In an embodiment, the pet food is a meat substitute, wherein the meat substitute mimicks the aspect (such as pattern, lettering), form, structure, composition (such as similar fat, protein and/or heme iron content), palatability, flavor, texture, color, aroma, appearance and/or nutritional value of meat. The degree of acceptance, the general liking or preference of one pet food over another, or the palatability of a pet food may be assessed by a preference/acceptance test. Palatability of pet foods is typically measured using a single-bowl or a two-bowl test or an operant lever-press test. For example, in a preference test, pets are offered a control meal and the test meal in a controlled environment. Experimenters record the rate at which the animals choose the test meal over the control meal. Larger tests can be conducted in a home setting by pet owners who are asked to record "food preference" behaviors such as time spent sniffing the food, licking lips or nose, ear or tail flicking, etc. This is mostly due to the addition of the isolated myoglobin as described herein. The meat substitute may not have all drawbacks of meat. For example, the meat substitute is healthier than meat. Moreover, the impact of the meat substitute on the environment (long term direct/indirect effect on climate change) is expected to be less detrimental than the known impact of meat.

In an embodiment, the pet food is a meat substitute, wherein the meat substitute is expected to mimick the composition (such as similar fat, protein and/or heme iron content), palatability, flavor, color and/or aroma of meat without having all its drawbacks. In an embodiment, the meat substitute is expected to mimick the flavor and/or aroma of meat without having all its drawbacks. In an embodiment, the meat substitute is expected to mimick the palatability of meat without having all its drawbacks. In an embodiment, the meat substitute is expected to mimick the flavor of meat without having all its drawbacks. In an embodiment, the meat substitute is expected to mimick the aroma of meat without having all its drawbacks. In the embodiments of this context, this is mostly due to the presence of the isolated myoglobin as described herein. Alternatively, it might have an aspect, form, structure, texture, color, palatability, flavor, aroma and/or appearance which is distinct from the one of meat.

Within the context of the invention, the meat experience may be mimicked when the meat substitute generates an aroma and/or a flavor compound recognizable by pets and characteristic of some odorants and/or flavor compound released when meat is cooked. For example, the formation of some of these odorants may be catalyzed by the iron of heme present in the isolated myoglobin. Without being bound to this theory, the formation may be due to lipid oxidation and/or Maillard reactions. This situation may be mimicked with the isolated myoglobin within the meat substitute of the invention.

In an embodiment of the invention, wherein the pet food is a meat substitute, preferably a raw meat substitute, wherein said raw meat substitute is expected to mimick the bloody and/or metallic aroma of meat. Preferably, the meat substitute is able to mimick the bloody and/or metallic aroma of meat to a higher degree than other meat substitutes (i.e. not according to the invention). In the context of this invention, "raw" means not subjected to a heat treatment, preferably uncooked and ungrilled.

In an embodiment of the invention, wherein the pet food is a meat substitute , preferably a cooked meat substitute, wherein said cooked meat substitute is expected to mimick the roasted aroma of meat, particularly of grilled meat. Preferably, the meat substitute is able to mimick the roasted aroma of meat to a higher degree than other meat substitutes (i.e. not according to the invention). In the context of this invention, "cooked" means subjected to a heat treatment, preferably grilled or roasted.

In the context of this invention, and specifically in the embodiments in this section, an "other meat substitute" or "a meat substitute not according to the invention" is preferably a plant-based meat substitute comprising a recombinant soy leghemoglobin (LegH).

In an embodiment, the meat substitute, preferably a grilled meat substitute of the invention, has an aroma characterized by a higher concentration of oxidized lipids, lipid oxidation products, pyrazines and/or pyrroles in the volatile compounds obtained from the (grilled) meat substitute relative to other meat substitutes (i.e. not according to the invention). Higher preferably means at least 10%, 20%, 30%, 40%, 50%, 60%, 70%, 80%, 90%, 100%, 110%, 120%, 130%, 140%, 150%, 160%, 170%, 180%, 190%, 200%, 210%, 220%, 230%, 240%, 250%, 260%, 270%, 280%, 290%, or 300%. Preferred pyrazines are methylpyrazine, 2,5-dimethylpyrazine, 2-ethyl-6-methylpyrazine. A preferred pyrrole is pyrrole. Preferred lipid oxidation products are 2-methylbutanal and 3-methylbutanal.

Aromas from meat substitute containing different concentrations of recombinant myoglobin may be analyzed using gas chromatography-mass spectrometry (GC-MS) with headspace solid-phase microextraction (HS-SPME).

Within the context of the invention, the meat experience may be mimicked when the color of the meat substitute is similar with the color of meat. The color of meat is determined by the concentration of heme-containing protein and/or by its oxidation state in the meat. Therefore, the total amount of the isolated myoglobin added to the meat substitute will determine the color of the meat substitute.

In an embodiment, the meat substitute, preferably a raw meat substitute, is expected to mimick the color of a meat, preferably of raw meat. Without being bound to this theory, the color of the meat substitute is mostly due to the addition of the isolated myoglobin. Preferably, the meat substitute of the invention is able to mimick the color of meat to a higher degree than other meat substitutes (i.e. not according to the invention).

In a preferred embodiment, the color of the meat substitute, preferably of a raw meat substitute of the invention, is essentially stable for at least 1, 2, 3, 4, 5, 6, 7, 8, 9, 10, 11, 12, 13, 14, 15, 16, 17, 18, 19 or 20 days, preferably upon storage under constant light at 4°C. Preferably, the color of the meat substitute of the invention is stable for 1, 2, 3, 4, 5, 6, 7, 8, 9, 10, 11, 12, 13, 14, 15, 16, 17, 18, 19 or 20 days longer than the time period wherein the color of meat or other meat substitutes is stable, more preferably wherein a ΔE change from 0% up to 10% is defined as stable. Essentially stable for at least X days preferably means a change of ΔE of the meat substitute between 0% and 0.5%, 1%, 1.5%, 2%, 2.5%, 3%, 3.5%, 4%, 4.5%, 5%, 5.5%, 6%, 6.5%, 7%, 7.5%, 8%, 8.5%, 9%, 9.5%, 10%, 10.5%, 11%, 11.5%, 12%, 12.5%, 13%, 13.5%, 14%, 14.5%, 15%, 15.5%, 16%, 16.5%, 17%, 17.5%, 18%, 18.5%, 19%, 19.5%, or 20% between day 0 and day X, wherein ΔE is. Most preferably, ΔE of the meat substitute does not change by more than 10% upon storage for at least 1, 2, 3, 4, 5, 6, 7, 8, 9, 10, 11, 12, 13, 14, 15, 16, 17, 18, 19 or 20 days. The color may be assessed via absorbance measurements using spectrometry.

Within the context of the invention, the meat experience may be mimicked when the composition of the meat substitute is similar with the composition of meat. The composition of the meat substitute may be seen to be similar to the meat composition when the same or similar components are present and optionally when the quantities in which they are present is the same or similar with the quantities present in meat. For example a similar fat, protein and/or heme iron content may be present in a meat substitute as in meat.

### Adding isolated myoglobin

In the first aspect of the invention, the method for preparing a pet food comprises adding an isolated myoglobin. The isolated myoglobin may be added or applied by manufacturer of a pet food, the consumer of a pet food, or any other producer of a pet food or related product.

In an embodiment, the (total) weight concentration of heme-proteins in the pet food is at least 10%, 20%, 30%, 40%, 50%, 60%, 70%, 80%, 90%, 100%, 110%, 120%, 130%, 140%, 150%, 160%, 170%, 180%, 190%, 200%, 210%, 220%, 230%, 240%, 250%, 260%, 270%, 280%, 290%, or 300% higher than the average concentration of heme-proteins in the pet food product produced from traditional or common process which does not explicitly comprise a step of adding isolated myoglobin. In this context, the average concentration of heme-proteins in meat of a specific species of an animal is determined over several corresponding animals, wherein no exogeneous or isolated myoglobin has been added to the meat of the animals after harvesting. In this context, the resulting pet food product of this invention is edible for a pet defined herein, and the addition of myoglobin using the method of this invention does not introduce toxicity or affect the food safety of said pet food product.

In an embodiment, the (total) weight concentration of heme-proteins in the pet food is at least 0.1%, 0.2%, 0.3%, 0.4%, 0.5%, 0.6%, 0.7%, 0.8%, 0.9%, 1.0%, 1.1%, 1.2%, 1.3%, 1.4%, 1.5%, 1.6%, 1.7%, 1.8%, 1.9%, 2.0%, 2.1%, 2.2%, 2.3%, 2.4%, 2.5%, 2.6%, 2.7%, 2.8%, 2.9%, 3.0%, 3.1%, 3.2%, 3.3%, 3.4%, 3.5%, 3.6%, 3.7%, 3.8%, 3.9%, 4.0%, 4.1%, 4.2%, 4.3%, 4.4%, 4.5%, 4.6%, 4.7%, 4.8%, 4.9%, 5.0%, 6%, 7%, 8%, 9%, 10%, preferably lower than 10%, more preferably lower than 5%.

In an embodiment, the (total) weight concentration of myoglobins in the pet food is at least 0.1%, 0.2%, 0.3%, 0.4%, 0.5%, 0.6%, 0.7%, 0.8%, 0.9%, 1.0%, 1.1%, 1.2%, 1.3%, 1.4%, 1.5%, 1.6%, 1.7%, 1.8%, 1.9%, 2.0%, 2.1%, 2.2%, 2.3%, 2.4%, 2.5%, 2.6%, 2.7%, 2.8%, 2.9%, 3.0%, 3.1%, 3.2%, 3.3%, 3.4%, 3.5%, 3.6%, 3.7%, 3.8%, 3.9%, 4.0%, 4.1%, 4.2%, 4.3%, 4.4%, 4.5%, 4.6%, 4.7%, 4.8%, 4.9%, 5.0%, 6%, 7%, 8%, 9%, 10%, preferably lower than 10%, more preferably lower than 5%. It is understood that the myoglobins comprised in the pet food may originate from the addition of the isolated myoglobin, or from another source.

In an embodiment, the weight fraction of myoglobins in the heme-proteins in the pet food is at least 50%, 51%, 52%, 53%, 54%, 55%, 56%, 57%, 58%, 59%, 60%, 61%, 62%, 63%, 64%, 65%, 66%, 67%, 68%, 69%, 70%, 71%, 72%, 73%, 74%, 75%, 76%, 77%, 78%, 79%, 80%, 81%, 82%, 83%, 84%, 85%, 86%, 87%, 88%, 89%, 90%, 91%, 92%, 93%, 94%, 95%, 96%, 97%, 98%, or 99%.

In an embodiment, the (total) weight concentration of heme-proteins in the pet food is at least 0.1%, 0.2%, 0.3%, 0.4%, 0.5%, 0.6%, 0.7%, 0.8%, 0.9%, 1.0%, 1.1%, 1.2%, 1.3%, 1.4%, 1.5%, 1.6%, 1.7%, 1.8%, 1.9%, 2.0%, 2.1%, 2.2%, 2.3%, 2.4%, 2.5%, 2.6%, 2.7%, 2.8%, 2.9%, 3.0%, 3.1%, 3.2%, 3.3%, 3.4%, 3.5%, 3.6%, 3.7%, 3.8%, 3.9%, 4.0%, 4.1%, 4.2%, 4.3%, 4.4%, 4.5%, 4.6%, 4.7%, 4.8%, 4.9%, 5.0%, 6%, 7%, 8%, 9%, 10%, and the weight fraction of myoglobins in the heme-proteins in the pet food is at least 90%.

In an embodiment, the (total) weight concentration of heme-proteins in the pet food is at least 3.0%, and the weight fraction of myoglobins in the heme-proteins in the pet food is at least 50%, 51%, 52%, 53%, 54%, 55%, 56%, 57%, 58%, 59%, 60%, 61%, 62%, 63%, 64%, 65%, 66%, 67%, 68%, 69%, 70%, 71%, 72%, 73%, 74%, 75%, 76%, 77%, 78%, 79%, 80%, 81%, 82%, 83%, 84%, 85%, 86%, 87%, 88%, 89%, 90%, 91%, 92%, 93%, 94%, 95%, 96%, 97%, 98%, or 99%.

In an embodiment, at least 50%, 55%, 60%, 65%, 70%, 75%, 80%, 85%, 90%, or 95% of heme-proteins in the pet food originate from the addition of the isolated myoglobin (per weight). In a more preferred embodiment, at least 50%, 55%, 60%, 65%, 70%, 75%, 80%, 85%, 90%, or 95% of myoglobins in the pet food originate from the addition of the isolated myoglobin (per weight).

In an embodiment, at least 50%, 55%, 60%, 65%, 70%, 75%, 80%, 85%, 90%, or 95% of myoglobins in the pet food originate from the addition of the isolated myoglobin (per weight). In a more preferred embodiment, at least 50%, 55%, 60%, 65%, 70%, 75%, 80%, 85%, 90%, or 95% of myoglobins in the pet food originate from the addition of the isolated myoglobin (per weight).

In an embodiment, the isolated myoglobin is added as part of a composition, wherein the weight concentration of the isolated myoglobin in the composition at least 10%, at least 15%, at least 20%, at least 25%, at least 30%, at least 35%, at least 40%, at least 45%, at least 50%, at least 55%, at least 60 %, at least 65%, at least 70%, at least 75%, at least 80%, at least 85%, at least 90 %. In this context, weight concentration may be expressed as a mass of myoglobin per total volume or mass of the composition.

In an embodiment, the isolated myoglobin is added as part of a composition, wherein the weight fraction of the isolated myoglobin in the protein fraction comprised in the composition is at least 10%, at least 15%, at least 20%, at least 25%, at least 30%, at least 35%, at least 40%, at least 45%, at least 50%, at least 55%, at least 60 %, at least 65%, at least 70%, 75%, at least 80%, at least 85%, at least 90 %, at least 95%, at least 96%, at least 97%, at least 98%, at least 99%. In this context, weight fraction is a dimensionless numbers which may be interpreted as a mass of myoglobin per mass of protein.

In an embodiment, the isolated myoglobin is in the form of powder. The amount of the isolated myoglobin needed to be added to the pet food may be calculated or estimated based on the concentration of myoglobin in the pet food before the addition and the desired final concentration of myoglobins in the pet food. In this context, the pet food before addition of the isolated myoglobin preferably contains less than 0.1%, less than 0.2 %, less than 0.3 %, less than 0.4 %, less than 0.5%, less than 0.6 %, less than 0.7%, less than 0.8 %, less than 0.9 %, less than 1.0 % heme-proteins per weight basis. A tool, such as a container, a cup, a spoon, a blender, a mixer, may be used to add the isolated myoglobin. The isolated myoglobin may be added directly to the pet food, or may be dissolved in an editable solvent, prior to be added to the pet food.

In an embodiment, the isolated myoglobin is in the form of solid shapes, wherein the solid shaped myogloblin has a pre-determined weight and/or volume. The amount of the isolated myoglobin needed to be added to the pet food may be calculated or estimated based on the concentration of the isolated myoglobin, and/or the volume of the solid-shaped isolated myoglobin, the total weight of the pet food and the desired final amount of myoglobins in the pet food. In this context, the pet food before addition of the isolated myoglobin preferably contains less than 0.1%, less than 0.2 %, less than 0.3 %, less than 0.4 %, less than 0.5%, less than 0.6 %, less than 0.7%, less than 0.8 %, less than 0.9 %, less than 1.0 % heme-proteins per weight basis. A tool, such as a container, a cup, a spoon, a blender, a mixer, may be used to add the isolated myoglobin. The isolated myoglobin may be added directly to the pet food, or may be dissolved in a food grade solvent, prior to be added to the pet food.

In an embodiment, the pet food is meat substitute, wherein the isolated myoglobin is added to crosslink with another substance, for example a pea vicilin protein.

### Isolated myoglobin

In an embodiment, the method of this invention comprises adding isolated myoglobin, wherein the isolated myoglobin is a recombinant myoglobin produced from fermentation by a microorganism which has been genetically modified to express said recombinant myoglobin. Myoglobins which may be represented by SEQ ID NO: 1-6 may be encoded by nucleic acids which may be represented by SEQ ID NO: 7-12, respectively, although it is understood that these nucleic acids sequence may need to be codon-optimized in order to be expressed by the microorganism.

In this application, the numbering of the myoglobin amino acid sequences originating from rat (SEQ ID NO: 1), rabbit (SEQ ID NO: 2), mouse (SEQ ID NO: 3), steppe mammoth (SEQ ID NO: 4) and woolly mammoth (SEQ ID NO:5) used herein begins with methionine or Met or M at position 1. All these amino acid sequences SEQ ID NO: 1-5 count 154 amino acid residues.

The numbering of the myoglobin amino acid sequence originating from tuna (SEQ ID NO: 6) used herein is slightly different from the consecutive numbering indicated in the sequence listing, as this sequence only counts 147 amino acid residues. In order to compare SEQ ID NO: 6 directly with SEQ ID NO: 1-5, SEQ ID NO: 6 is also attributed 154 positions, wherein eight positions are considered to be gaps (2, 3, 6, 7, 51, 120, 121).

A microorganism may be a prokaryote, a eukaryote or a filamentous fungus. A prokaryote may be a bacterium. The bacterium may be a Gram positive/Gram negative bacterium slected from the following list: *Absidia, Achromobacter, Acinetobacter, Aeribacillus, Aneurinibacillus, Agrobacterium, Aeromonas, Alcaligenes, Arthrobacter, Arzoarcus, Azomonas, Azospirillum, Azotobacter, Bacillus, Beijerinckia, Bradyrhizobium, Brevibacills, Burkholderia, Byssochlamys, Citrobacter, Clostridium, Comamonas, Cupriavidus, Corynebacterium, Deinococcus, Escherichia, Enterobacter, Flavobacterium, Fusobacterium, Gossypium, Klebsiella, Lactobacillus, Listeria, Megasphaera, Micrococcus, Mycobacterium, Norcadia, Porphyromonas, Propionibacterium, Pseudomonas, Ralstonia, Rhizobium, Rhodopseudomonas, Rhodospirillum, Rodococcus, Roseburia, Shewanella, Streptomycetes, Xanthomonas, Xylella, Yersinia, Treponema, Vibrio, Streptococcus, Lactococcus, Zymomonas, Staphylococcus, Salmonella, Sphingomonas, Sphingobium, Novosphingobium, Brucella* and *Microscilla.* Preferred bacteria include *Aeribacillus pallidus, Aneurinibacillus terranovensis, Bacillus subtilis, Bacillus amyloliquefaciens, Bacillus coagulans, Bacillus licheniformis, Bacillus megaterium, Bacillus halodurans, Bacillus pumilus, Brevibacillus thermoruber, Brevibacillus panacihumi, Cupriavidus basilensis, G. Iraustophilus, Gluconobacter oxydans, Caulobacter crescentus CB 15, Methylobacterium extorquens, Rhodobacter sphaeroides, Pelotomaculum thermopropionicum, Pseudomonas zeaxanthinifaciens, Pseudomonas putida, Paracoccus denitrificans, Escherichia coli, Corynebacterium glutamicum, Staphylococcus carnosus, Streptomyces lividans, Sinorhizobium melioti, Sphingobium sp., Novosphingobium sp., Sphingomonas henshuiensis,* and *Rhizobium radiobacter.* A preferred bacterium is Escherichia coli. Preferred Escherichia coli strains include: 58, 679, WG1, DH5α, TG1, TOP10, K12, BL21, BL21 DE3, XL1-Blue, XL10-Gold, TB1, REG-12, W945, HB101, DH1, DP50, AB284, JC9387, AG1, C600, Cavalli Hfr, Y10.

A eukaryote may be a yeast or a filamentous fungus. Preferred yeasts include *Saccharomyces, Kluyveromyces, Candida, Pichia, Schizosaccharomyces, Hansenula, Kloeckera, Schwanniomyces, Yarrowia, Cryptococcus, Debaromyces, Saccharomycecopsis, Saccharomycodes, Wickerhamia, Debayomyces, Hanseniaspora, Ogataea, Kuraishia, Komagataella, Metschnikowia, Williopsis, Nakazawaea, Torulaspora, Bullera, Rhodotorula, Sporobolomyces.* Within yeasts, the species *Kluyveromyces lactis, Saccharomyces cerevisiae, Hansenula polymorpha* (also known as *Ogataea henricii*), *Yarrowia lipolytica, Candida tropicalis* and *Pichia pastoris* (also known as *Komagataella phaffii*) are preferred. Preferred Pichia strains are selected from the following list: Bg09, Bg10, Bg11, Bg12 (exemplified), Bg20, Bg21, Bg22, Bg23, Bg24, Bg25, Bg26, Bg40, Bg43, Bg44, Bg45, Y-11430, X-33, GS115, KM71, SMD1168, SMD1165, MC100-3, most preferred Bg10 and derivatives. Preferred Saccharomyces strains are selected from the following list: S288C, CEN.PK family, CBS 2354, ATCC 2360, ATCC 4098, ATCC 4124, ATCC 4126, ATCC 4127, ATCC 4921, ATCC 7754, ATCC 9763, ATCC 20598, ATCC 24855, ATCC 24858, ATCC 24860, ATCC 26422, ATCC 46523, ATCC 56069, ATCC 60222, ATCC 60223, ATCC 60493, ATCC 66348, ATCC 66349, ATCC 96581. A preferred yeast is a *Pichia* strain, more preferably *Pichia pastoris.*

A filamentous fungus may be selected from the following list including: *Acremonium, Agaricus, Aspergillus, Aureobasidium, Chrysosporium, Coprinus, Cryptococcus, Filibasidium, Fusarium, Humicola, Magnaporthe, Mucor, Myceliophthora, Neocallinastix, Neurospora, Paecilomyces, Penicillium, Piromyces, Panerochaete, Pleurotus, Schizophyllum, Talaromyces, Thermoascus, Thielavia, Tolypocladium, Ustilago and Trichoderma.* Preferred filamentous fungus are selected from the following list: *Aspergillus niger, Aspergillus nidulans, Aspergillus fumigatus, Aspergillus oryzae, Aspergillus vadensis, Penicillium chrysogenum, Penicillium citrinum, Penicillium rubens, Penicillium oxalicum, Penicillium subrubescens, Rasamsonia emersonii, Talaromyces emersonii, Acremonium chrysogenum, Trichoderma reesei, Aspergillus sojae,* and *Chrysosporium lucknowense.* Preferred strains of filamentous fungus are selected from the following list: *Aspergillus niger* CBS 513.88, N593, CBS 120.49, N402, ATCC 1015 *Aspergillus oryzae* ATCC 20423, IFO 4177, ATCC 1011, ATCC 9576, ATCC 14488-14491, ATCC 11601, ATCC12892, *Aspergillus vadensis* CBS 113365, CBS 102787, IMI 142717, IBT 24658, CBS 113226, *Penicillium chrysogenum* CBS 455.95, *Penicillium citrinum* ATCC 38065, *Penicillium chrysogenum* P2, Wisconsin 54-1255, *Penicillium subrubescens* CBS 132785, FBCC 1632, *Talaromyces emersonii* CBS 393.64, *Acremonium chrysogenum* ATCC 36225 or ATCC 48272, *Trichoderma reesei* ATCC 26921 or ATCC56765 or ATCC 26921, *Aspergillus sojae* ATCC11906, *Chrysosporium lucknowense* ATCC44006. In a preferred embodiment, *Aspergillus* is used as a filamentous fungus. More preferably, an *Aspergillus niger* strain is used.

In an embodiment, the microorganism used in the fermentation may be a bacterium, a yeast, a filamentous fungus or a cultured mammalian cell line, preferably Escherichia coli or Saccharomyces cerevisiae. In this context, single, isolated, cultured mammalian cells may be considered as microorganisms. In a further embodiment, the microorganism may be a bacterium, a yeast or a filamentous fungus. The microorganisms in the context of this invention are useful for the production of a myoglobin. Accordingly, in a further aspect, the invention provides a method for the production of a myoglobin as defined herein, comprising culturing the microorganisms in a suitable medium and optionally recovering the microorganism and/or myoglobin. Optionally, the produced myoglobin does not comprise a signal peptide as defined elsewhere herein.

Cell culturing may be performed for a duration of 14, 13.5, 13, 12.5, 12, 11.5, 11, 10.5, 10, 9.5, 9, 8.5, 8, 7.5, 7, 6.5, 6, 5.5, 5, 4.5, 4, 3.5, 3, 2.5, 2, 1.5 or 1 days, wherein said duration may deviate by 20%. Preferably, cell culturing is performed for a duration of 14, 13.5, 13, 12.5, 12, 11.5, 11, 10.5, 10, 9.5, 9, 8.5, 8, 7.5, 7, 6.5, 6, 5.5, 5, 4.5, 4, 3.5, 3, 2.5, 2, 1.5 or 1 days, wherein said duration may deviate by 10%. More preferably, the cell culturing is performed for 5 days, wherein said duration may deviate by 20%, most preferably by 10%.

The cell culturing will typically result in a production of at least 100 mg/L, 200 mg/L, 300 mg/L, 400 mg/L, 500 mg/L, 600 mg/L, 700 mg/L, 800 mg/L, 900 mg/L, 1 g/L, 2 g/L, 3 g/L, 4 g/L, 5 g/L, 6 g/L, 7 g/L, 8 g/L, 9 g/L, 10 g/L, 11 g/L, 12 g/L, 13 g/L, 14 g/L, 15 g/L, 16 g/L, 17 g/L, 18 g/L, 19 g/L, 20 g/L, 21 g/L, 22 g/L, 23 g/L, 24 g/L, 25 g/L, 50 g/L, 75 g/L, 100 g/L, 200 g/L or 300 g/L of a myoglobin.

The cell culturing will typically result in at least 10%, 20%, 25%, 30%, 35%, 40%, 45%, 50%, 55%, 60%, 65%, 70%, 75%, 80%, 85%, 90%, 95%, or 100%, preferably at least 20%, more preferably at least 40%, most preferably at least 60% of the carbon source in the growth medium being converted to a myoglobin.

Cell culturing may also be performed by implementation of a multiple step, preferably a two-step, culture method. For example, a production step of a myoglobin may be preceded by a cellular biomass growth step, wherein only limited production or no production is taking place. The different steps may be carried out using different culture modes and/or different growth media and/or different culture process parameter values, depending on the goal of each step and/or the cultured cell. The biomass during the production step may or may not be actively growing.

The host cells and/or myoglobin may optionally be recovered from the culture medium. When present intracellularly, the myoglobin may optionally be recovered from the recovered cellular biomass. Optionally, the recovered myoglobin is purified. Preferably, purification of the myoglobin will result in a purity of at least 70%, more preferably at least 75%, 80%, 85%, 90%, 95%, 96%, 97%, 98%, 99%, most preferably in a myoglobin that is substantially pure.

In an embodiment, the microorganism produces the myoglobin extracellularly. The myoglobin is transported out of the host cell after it is synthesized in the host cell. In this context, both secretory and extracellular fermentations are considered to be extracellular productions. Without being bound to this theory, an extracellular production process has the advantage that the downstream processing to recover the produced myoglobin is more convenient, efficient and/or effective. Furthermore, an extracellular production process may result in a composition comprising the myoglobin with a high purity such as at least 60%, 65%, 70%, 75%, 80%, 85%, 90%, 95%, 96%, 97%, 98%, or 99% with minimal downstream processing compared to intracellular methods wherein the myoglobin is not transported out of the host cell after its synthesis. Purity may be measured as the weight percentage of the total protein fraction in the cell-free supernatant obtained at the end of a process or extracellular process according to the invention. Without being bound to this theory, an extracellular production process has the advantage that the optional step of recovering myoglobin does not comprise lysing the host cell. As a result, the extracellular process may result in a composition having a low concentration of nucleic acids originating from the host cell.

The relevant downstream processing technology that may be suitable for recovery and/or purification will depend on whether the myoglobin is accumulated within the cultured cells or excreted. Said processing technology and the associated choice will be known to the skilled person and is discussed, for example, in Wesselingh, J.A and Krijgsman, J., 1st edition, Downstream Processing in Biotechnology, Delft Academic Press, NL, 2013. In a recovery process, the biomass may be recovered from the culture medium using e.g. centrifugation or filtration. If the produced myoglobin is accumulated within the cells, it can then be recovered and/or purified from the biomass. If it is excreted, it can be recovered from the cell-free medium or, if the biomass separation step is skipped, directly from the culture broth. Recovery and/or purification may be performed according to any conventional recovery or purification methodology known in the art. Methods for recovery and/or purification of proteins are known to the skilled person and are discussed in standard handbooks, such as Sambrook and Russel, Molecular Cloning: A Laboratory Manual, 3rd edition, Cold Spring Harbor Laboratory, Cold Spring Harbor Laboratory Press, NY, 2001 or Ausubel F. et al, eds., Current protocols in molecular biology, Green Publishing and Wiley Interscience, NY, 2003. Examples of widely used recovery and/or purification methods include chromatographic methods such as gel-filtration chromatography, ion-exchange chromatography, immunoaffinity chromatography, metal affinity chromatography, gel-filtration chromatography, fractionation with precipitants such as ammonium sulfate and polyethylene glycol, gel electrophoresis and salting out and dialysis. Preferably, metal affinity chromatography or size-exclusion chromatography is used. Recovery and/or purification may optionally be enhanced by linking the enzyme polypeptide to a sequence that facilitates purification, such as with a GST domain, using well-known molecular toolbox techniques. Optionally, the sequence that facilitates purification and/or signal peptide that facilitates excretion of the myoglobin is removed from the final product using techniques known in the art, for example proteolysis by endopeptidases targeting a linker between the sequence that facilitates purification and/or the signal peptide and the myoglobin. In some embodiments, the enzyme polypeptide is linked (fused) to a hexa-histidine peptide, such as the tag provided in a pET23a(+) vector (Genescript Biotech, Leiden, The Netherlands), among others, many of which are commercially available. As, for example, described in Gentz et al., Proc. Natl. Acad. Sci. USA 86:821-824 (1989), hexa-histidine peptide provides for convenient purificaton of the fusion protein.

In a preferred embodiment, the isolated myoglobin is obtained via recovering and/or purifing from the culture medium. This may be realized continuously with the production process or subsequently to it. In a preferred embodiment, the isolated myoglobin is obtained via recovering and/or purifing from the cultured cells. A filter may be used for the purification of the recovered myoglobin. This may be realized continuously with the production process, by harvesting fractions of growing cells, or subsequently to it.

In an embodiment, the isolated myoglobin is sterilized, shredded, spray dryed, freeze dryed, blended, shaped, cubed, dosed or packed. Sterilization refers to any process that removes, kills, or deactivates all forms of life (particularly microorganisms such as fungi, bacteria, spores, and unicellular eukaryotic organisms) and other biological agents such as prions present in or on a specific surface, object, or fluid. Sterilization can be achieved through various means, including heat, chemicals, irradiation, high pressure, and filtration. Freeze drying, also known as lyophilization or cryodesiccation, is a low temperature dehydration process that involves freezing the product, lowering pressure, then removing the ice by sublimation. Packing aims to provide a protection for the product, to tamper resistance and to provide physica, chemical or biological needs. Packing may also contain nutrition facts, characteristics of the products, and an instruction/guide for use of the product.

In a preferred embodiment, the cultured host cells used in fermentation are immobilized. Immobilization of cells may be achieved by any means known to the skilled person as discussed in standard handbooks such as Guisan, J.M., Bolivar, J.M., López-Gallego, F., Rocha-Martin, J. (Eds.), Immobilization of Enzymes and Cells: Methods and Protocols, Springer US, USA, 2020. Typically, the host cells can be immobilized to a semi-solid or solid support by three different methods. The first method involves polymerizing or solidifying a spore- or cell-containing solution. Examples of polymerizable or solidifiable solutions include alginate, A-carrageenan, chitosan, polyacrylamide, polyacrylamide-hydrazide, agarose, polypropylene, polyethylene glycol, dimethyl acrylate, polystyrene divinyle benzene, polyvinyl benzene, polyvinyl alcohol, epoxy carrier, cellulose, cellulose acetate, photocrosslinkable resin, prepolymers, urethane, and gelatin. The second method involves cell adsorption onto a support. Examples of such supports include bone char, cork, clay, resin, sand porous alumina beads, porous brick, porous silica, celite, orwood chips. The host cells can colonize the support and form a biofilm. The third method involves the covalent coupling of the host cells to a support using chemical agents like glutaraldehyde, o-dianisidine (U.S. Pat. No. 3,983,000), polymeric isocyanates (U.S. Pat. No. 4,071,409), silanes (U.S. Pat. Nos. 3,519,538 and 3,652,761), hydroxyethyl acrylate, transition metal-activated supports, cyanuric chloride, sodium periodate, toluene, and the like. Cultured host cells can be immobilized in any phase of their growth, for example after a desired cell density in the culture has been reached. Suitable culture modes and/or different culture process parameter values will be known to the skilled person and are discussed in standard handbooks, such as Colin R. Phillips C.R., Poon Y. C., Immobilization of Cells: In Biotechnology Monographs book series (Biotechnology, volume 5), Springer, Berlin, Germany, 1988; Tampion J., Tampion M. D., Immobilized Cells: Principles and Applications, Cambridge University Press, UK, 1987. Preferably, immobilized cells are cultured in packed bed bioreactors, also known as plug-flow bioreactors, or expanded (fluidized) bed bioreactors. Suitable growth media and recovery and/or purification methods are further discussed elsewhere herein.

In an embodiment, an isolated myoglobin is a myoglobin which is not comprised in a cell or a tissue before the addition. In other words, the isolated myoglobin is added as a "separate" (or isolated) protein which is not comprised in a cell or a tissue. Thus, isolated in this context does not refer to the origin of the myoglobin (i.e. isolated from a source such as cell or a tissue), but to the fact that a separate protein is added. It is of course understood that the isolated myoglobin may become part of a cell or a tissue once it has been added to the pet food.

An isolated myoglobin may be derived from rat, rabbit, mouse, mammoth or tuna. Preferably, the amino acids sequence is derived from rat, rabbit, mouse, mammoth or tuna, by addition, deletion and/or substitution of at least one amino acid. Addition, deletion and/or substitutions of two, three, four, five, six, seven, eight, nine orten amino acids is also contemplated by the invention. Examples of myoglobin amino acid sequence from rat, rabbit, mouse, mammoth or tuna have been disclosed later on by a given SEQ ID NO:1-6. Such isolated myoglobin derived from rat, rabbit, mouse, mammoth or tuna may also exert at least a detectable level of an activity of an isolated myoglobin as explained later herein. A mammoth may be any species in the genus *Mammuthus,* such as a woolly mammoth (*Mammuthus primigenius*) or a steppe mammoth (*Mammuthus trogontherii*), in the context of this application, unless explicitly stated otherwise.

In an embodiment, the isolated myoglobin is a rat myoglobin, a rabbit myoglobin, a mouse myoglobin, a mammoth myoglobin or a tuna myoglobin, or a myoglobin derived from any of these myoglobins. In an embodiment, the isolated myoglobin is rat myoglobin or derived therefrom. In an embodiment, the isolated myoglobin is rabbit myoglobin or derived therefrom. In an embodiment, the isolated myoglobin is mouse myoglobin or derived therefrom. In an embodiment, the isolated myoglobin is steppe mammoth myoglobin or derived therefrom. In an embodiment, the isolated myoglobin is woolly mammoth myoglobin or derived therefrom. In an embodiment, the the isolated myoglobin is tuna myoglobin or derived therefrom.

In an embodiment, the isolated myoglobin may be represented by any one of SEQ ID NO: 1, 2, 3, 4, 5 or 6, preferably by SEQ ID NO: 1 or 2.

In an embodiment, the isolated myoglobin is from a rat as defined earlier herein, preferably a myoglobin having at least 90% sequence identity with SEQ ID NO: 1, more preferably a myoglobin having at least 90% sequence identity with SEQ ID NO: 1, in combination with G at position 6, Q at position 9, M at position 10, N at position 13, I at position 14, L at position 22, A at position 23, Q at position 27, L at position 30, I at position 31, G at position 32, K at position 35, A at position 36, E at position 42, K at position 43, N at position 49, S at position 52, E at position 53, E at position 54, E at position 55, S at position 58, H at position 65, C at position 67, A at position 72, T at position 75, K at position 79, Q at positon 82, Q at position 92, S at position 93, T at position 96, V at position 102, E at position 110, V at position 111, Q at position 114, L at position 116, K at position 117, K at position 118, R at position 119, S at position 121, G at position 122, D at position 123, A at position 128, G at position 130, S at position 133, I at position 143, A at position 145, K at position 146, E at position 149, L at position 150, or Q at position 153.

In an embodiment, the isolated myoglobin is from a rabbit as defined earlier herein, preferably a myoglobin having at least 90% sequence identity with SEQ ID NO: 2, more preferably a myoglobin having at least 90% sequence identity with SEQ ID NO: 2, in combination with A at position 6, Q at position 9, L at position 10, N at position 13, V at position 14, L at position 22, A at position 23, Q at position 27, L at position 30, I at position 31, G at position 32, H at position 35, T at position 36, E at position 42, K at position 43, H at position 49, S at position 52, E at position 53, D at position 54, E at position 55, A at position 58, H at position 65, N at position 67, A at position 72, A at position 75, K at position 79, H at positon 82, Q at position 92, S at position 93, T at position 96, V at position 102, E at position 110, A at position 111, H at position 114, L at position 116, H at position 117, S at position 118, R at position 119, P at position 121, G at position 122, D at position 123, A at position 128, A at position 130, S at position 133, I at position 143, A at position 145, K at position 146, E at position 149, L at position 150, or Q at position 153.

In an embodiment, the isolated myoglobin is from a mouse as defined earlier herein, preferably a myoglobin having at least 90% sequence identity with SEQ ID NO: 3, more preferably a myoglobin having at least 90% sequence identity with SEQ ID NO: 3, in combination with G at position 6, Q at position 9, L at position 10, N at position 13, V at position 14, L at position 22, A at position 23, Q at position 27, L at position 30, I at position 31, G at position 32, K at position 35, T at position 36, D at position 42, K at position 43, N at position 49, S at position 52, E at position 53, E at position 54, D at position 55, G at position 58, H at position 65, C at position 67, A at position 72, T at position 75, K at position 79, Q at positon 82, Q at position 92, S at position 93, T at position 96, V at position 102, E at position 110, I at position 111, E at position 114, L at position 116, K at position 117, K at position 118, R at position 119, S at position 121, G at position 122, D at position 123, A at position 128, G at position 130, S at position 133, I at position 143, A at position 145, K at position 146, E at position 149, L at position 150, or Q at position 153.

In an embodiment, the isolated myoglobin is from a steppe mammoth as defined earlier herein, preferably a myoglobin having at least 90% sequence identity with SEQ ID NO: 4, more preferably a myoglobin having at least 90% sequence identity with SEQ ID NO: 4 in combination with G at position 6, E at position 9, L at position 10, K at position 13, T at position 14, I at position 22, P at position 23, L at position 27, F at position 30, V at position 31, T at position 35, G at position 36, E at position 42, K at position 43, H at position 49, T at position 52, E at position 53, G at position 54, E at position 55, A at position 58, Q at position 65, V at position 67, A at position 72, G at position 75, K at position 79, H at position 82, Q at position 84, A at position 85, I at position 87, Q at position 88, P at position 89, H at position 92, S at position 93, T at position 96, I at position 102, D at position 110, A at position 111, H at position 114, L at position 116, Q at position 117, S at position 118, P at position 121, A at position 122, E at position 123, A at position 128, G at position 130, K at position 133, I at position 143, A at position 145, K at position 146, E at position 149, L at position 150, or Q at position 153.

In an embodiment, the isolated myoglobin is from a woolly mammoth as defined earlier herein, preferably a myoglobin having at least 90% sequence identity with SEQ ID NO: 5, more preferably a myoglobin having at least 90% sequence identity with SEQ ID NO: 5 in combination with G at position 6, E at position 9, L at position 10, K at position 13, T at position 14, I at position 22, P at position 23, L at position 27, F at position 30, V at position 31, T at position 35, G at position 36, E at position 42, K at position 43, H at position 49, T at position 52, E at position 53, G at position 54, E at position 55, A at position 58, Q at position 65, V at position 67, A at position 72, G at position 75, K at position 79, H at position 82, Q at position 84, A at position 85, I at position 87, Q at position 88, P at position 89, Q at position 92, S at position 93, T at position 96, I at position 102, D at position 110, A at position 111, H at position 114, L at position 116, Q at position 117, S at position 118, P at position 121, A at position 122, E at position 123, A at position 128, G at position 130, K at position 133, I at position 143, A at position 145, K at position 146, E at position 149, L at position 150, or Q at position 153.

In an embodiment, the isolated myoglobin is from a tuna as defined earlier herein, preferably a myoglobin having at least 90% sequence identity with SEQ ID NO: 6, more preferably a myoglobin having at least 90% sequence identity with SEQ ID NO: 6 in combination with D at position 9, A at position 10, K at position 13, C at position 14, Y at position 22, T at position 23, G at position 27, L at position 30, T at position 31, K at position 35, E at position 36, K at position 42, L at position 43, G at position 49, A at position 52, Q at position 53, A at position 54, D at position 55, G at position 58, H at position 65, A at position 67, K at position 72, E at position 75, A at position 79, S at position 82, A at position 84, A at position 85, L at position 87, K at position 88, P at position 89, N at position 92, S at position 93, T at position 96, I at position 102, E at position 110, V at position 111, K at position 114, M at position 116, H at position 117, E at position 118, A at position 122, G at position 123, Q at position 128, T at position 130, R at position 133, L at position 143, A at position 145, N at position 146, E at position 149, L at position 150, or S at position 153.

In an embodiment, the isolated myoglobin may be represented by one of the following amino acid sequences:
a) having at least 90% sequence identity with SEQ ID NO: 1, and having at least one of the following amino acid combinations:
   - M at position 10, and/or
   - A at position 36, and/or
   - S at position 58, and/or
   - M at position 10 and A at position 36, and/or
   - M at position 10 and S at position 58, and/or
   - A at position 36 and S at position 58, and/or
   - M at position 10 and A at position 36 and S at position 58;
b) having at least 90% sequence identity with SEQ ID NO: 2, and having an amino acid A at position 6;
c) having at least 90% sequence identity with SEQ ID NO: 3, and having at least one of the following amino acid combinations:
   - D at position 55, and/or
   - I at position 111, and/or
   - E at position 114, and/or
   - D at position 55 and I at position 111, and/or
   - D at position 55 and E at position 114, and/or
   - I at position 111 and E at position 114, and/or
   - D at position 55 and I at position 111 and E at position 114;
d) having at least 90% identity with SEQ ID NO: 4 or 5, and having F at position 30 and/or Q at position 65;
e) having at least 90% identity with SEQ ID NO: 6, and having H at position 65 and/or position 94;
f) having at least 90% identity with SEQ ID NO: 1, 2 or 3, and having at least one of the following amino acid combinations;
   - L at position 22, and/or
   - A or T at position 36, and/or
   - G at position 122;
   - L at position 22 and A or T at position 36, and/or
   - L at position 22 and G at position 122; and/or
   - A or T at position 36 and G at position 122, and/or
   - L at position 22 and A or T at position 36 and G at position 122;
g) having at least 90% identity with any one from SEQ ID NO: 1 to 5, and having I at position 87;
h) having at least 90% identity with SEQ ID NO: 1 or 3, and having at least one or more of the following amino acids or any combinations thereof;
   - N at position 49, and/or
   - E at position 54, and/or
   - C at position 67, and/o
   - T at position 75, and/or
   - Q at position 82, and/or
   - K at position 117, and/or
   - K at position 118, and/or
   - S at position 121,
i) having at least 90% identity with SEQ ID NO: 4, , and having at least one of the following amino acid combinations:
   - H at position 92, and/or
   - H at position 92 and F at position 30, and/or
   - H at position 92 and Q at position 65, and/or;
   - H at position 92 and F at position 30 and Q at position 65.

In an embodiment, the isolated myoglobin is a recombinant myoglobin, wherein the recombinant myoglobin is from a rat as defined earlier herein, preferably a myoglobin having at least 90% sequence identity with SEQ ID NO: 1, more preferably a myoglobin having at least 90% sequence identity with SEQ ID NO: 1, in combination with G at position 6, Q at position 9, M at position 10, N at position 13, I at position 14, L at position 22, A at position 23, Q at position 27, L at position 30, I at position 31, G at position 32, K at position 35, A at position 36, E at position 42, K at position 43, N at position 49, S at position 52, E at position 53, E at position 54, E at position 55, S at position 58, H at position 65, C at position 67, A at position 72, T at position 75, K at position 79, Q at positon 82, Q at position 92, S at position 93, T at position 96, V at position 102, E at position 110, V at position 111, Q at position 114, L at position 116, K at position 117, K at position 118, R at position 119, S at position 121, G at position 122, D at position 123, A at position 128, G at position 130, S at position 133, I at position 143, A at position 145, K at position 146, E at position 149, L at position 150, or Q at position 153.

In an embodiment, the isolated myoglobin is a recombinant myoglobin, wherein the recombinant myoglobin is from a rabbit as defined earlier herein, preferably a myoglobin having at least 90% sequence identity with SEQ ID NO: 2, more preferably a myoglobin having at least 90% sequence identity with SEQ ID NO: 2, in combination with A at position 6, Q at position 9, L at position 10, N at position 13, V at position 14, L at position 22, A at position 23, Q at position 27, L at position 30, I at position 31, G at position 32, H at position 35, T at position 36, E at position 42, K at position 43, H at position 49, S at position 52, E at position 53, D at position 54, E at position 55, A at position 58, H at position 65, N at position 67, A at position 72, A at position 75, K at position 79, H at positon 82, Q at position 92, S at position 93, T at position 96, V at position 102, E at position 110, A at position 111, H at position 114, L at position 116, H at position 117, S at position 118, R at position 119, P at position 121, G at position 122, D at position 123, A at position 128, A at position 130, S at position 133, I at position 143, A at position 145, K at position 146, E at position 149, L at position 150, or Q at position 153.

In an embodiment, the isolated myoglobin is a recombinant myoglobin, wherein the recombinant myoglobin is from a mouse as defined earlier herein, preferably a myoglobin having at least 90% sequence identity with SEQ ID NO: 3, more preferably a myoglobin having at least 90% sequence identity with SEQ ID NO: 3, in combination with G at position 6, Q at position 9, L at position 10, N at position 13, V at position 14, L at position 22, A at position 23, Q at position 27, L at position 30, I at position 31, G at position 32, K at position 35, T at position 36, D at position 42, K at position 43, N at position 49, S at position 52, E at position 53, E at position 54, D at position 55, G at position 58, H at position 65, C at position 67, A at position 72, T at position 75, K at position 79, Q at positon 82, Q at position 92, S at position 93, T at position 96, V at position 102, E at position 110, I at position 111, E at position 114, L at position 116, K at position 117, K at position 118, R at position 119, S at position 121, G at position 122, D at position 123, A at position 128, G at position 130, S at position 133, I at position 143, A at position 145, K at position 146, E at position 149, L at position 150, or Q at position 153.

In an embodiment, the isolated myoglobin is a recombinant myoglobin, wherein the recombinant myoglobin is from a steppe mammoth as defined earlier herein, preferably a myoglobin having at least 90% sequence identity with SEQ ID NO: 4, more preferably a myoglobin having at least 90% sequence identity with SEQ ID NO: 4 in combination with G at position 6, E at position 9, L at position 10, K at position 13, T at position 14, I at position 22, P at position 23, L at position 27, F at position 30, V at position 31, T at position 35, G at position 36, E at position 42, K at position 43, H at position 49, T at position 52, E at position 53, G at position 54, E at position 55, A at position 58, Q at position 65, V at position 67, A at position 72, G at position 75, K at position 79, H at position 82, Q at position 84, A at position 85, I at position 87, Q at position 88, P at position 89, H at position 92, S at position 93, T at position 96, I at position 102, D at position 110, A at position 111, H at position 114, L at position 116, Q at position 117, S at position 118, P at position 121, A at position 122, E at position 123, A at position 128, G at position 130, K at position 133, I at position 143, A at position 145, K at position 146, E at position 149, L at position 150, or Q at position 153.

In an embodiment, the isolated myoglobin is a recombinant myoglobin, wherein the recombinant myoglobin is from a woolly mammoth as defined earlier herein, preferably a myoglobin having at least 90% sequence identity with SEQ ID NO: 5, more preferably a myoglobin having at least 90% sequence identity with SEQ ID NO: 5 in combination with G at position 6, E at position 9, L at position 10, K at position 13, T at position 14, I at position 22, P at position 23, L at position 27, F at position 30, V at position 31, T at position 35, G at position 36, E at position 42, K at position 43, H at position 49, T at position 52, E at position 53, G at position 54, E at position 55, A at position 58, Q at position 65, V at position 67, A at position 72, G at position 75, K at position 79, H at position 82, Q at position 84, A at position 85, I at position 87, Q at position 88, P at position 89, Q at position 92, S at position 93, T at position 96, I at position 102, D at position 110, A at position 111, H at position 114, L at position 116, Q at position 117, S at position 118, P at position 121, A at position 122, E at position 123, A at position 128, G at position 130, K at position 133, I at position 143, A at position 145, K at position 146, E at position 149, L at position 150, or Q at position 153.

In an embodiment, the isolated myoglobin is a recombinant myoglobin, wherein the recombinant myoglobin is from a tuna as defined earlier herein, preferably a myoglobin having at least 90% sequence identity with SEQ ID NO: 6, more preferably a myoglobin having at least 90% sequence identity with SEQ ID NO: 6 in combination with D at position 9, A at position 10, K at position 13, C at position 14, Y at position 22, T at position 23, G at position 27, L at position 30, T at position 31, K at position 35, E at position 36, K at position 42, L at position 43, G at position 49, A at position 52, Q at position 53, A at position 54, D at position 55, G at position 58, H at position 65, A at position 67, K at position 72, E at position 75, A at position 79, S at position 82, A at position 84, A at position 85, L at position 87, K at position 88, P at position 89, N at position 92, S at position 93, T at position 96, I at position 102, E at position 110, V at position 111, K at position 114, M at position 116, H at position 117, E at position 118, A at position 122, G at position 123, Q at position 128, T at position 130, R at position 133, L at position 143, A at position 145, N at position 146, E at position 149, L at position 150, or S at position 153.

In an embodiment, the isolated myoglobin is a recombinant myoglobin, wherein the recombinant myoglobin may be represented by one of the following amino acid sequences:
a) having at least 90% sequence identity with SEQ ID NO: 1, and having at least one of the following amino acid combinations:
   - M at position 10, and/or
   - A at position 36, and/or
   - S at position 58, and/or
   - M at position 10 and A at position 36, and/or
   - M at position 10 and S at position 58, and/or
   - A at position 36 and S at position 58, and/or
   - M at position 10 and A at position 36 and S at position 58;
b) having at least 90% sequence identity with SEQ ID NO: 2, and having an amino acid A at position 6;
c) having at least 90% sequence identity with SEQ ID NO: 3, and having at least one of the following amino acid combinations:
   - D at position 55, and/or
   - I at position 111, and/or
   - E at position 114, and/or
   - D at position 55 and I at position 111, and/or
   - D at position 55 and E at position 114, and/or
   - I at position 111 and E at position 114, and/or
   - D at position 55 and I at position 111 and E at position 114;
d) having at least 90% identity with SEQ ID NO: 4 or 5, and having F at position 30 and/or Q at position 65;
e) having at least 90% identity with SEQ ID NO: 6, and having H at position 65 and/or position 94;
f) having at least 90% identity with SEQ ID NO: 1, 2 or 3, and having at least one of the following amino acid combinations;
   - L at position 22, and/or
   - A or T at position 36, and/or
   - G at position 122;
   - L at position 22 and A or T at position 36, and/or
   - L at position 22 and G at position 122; and/or
   - A or T at position 36 and G at position 122, and/or
   - L at position 22 and A or T at position 36 and G at position 122;
g) having at least 90% identity with any one from SEQ ID NO: 1 to 5, and having I at position 87;
h) having at least 90% identity with SEQ ID NO: 1 or 3, and having at least one or more of the following amino acids or any combinations thereof;
   - N at position 49, and/or
   - E at position 54, and/or
   - C at position 67, and/or
   - T at position 75, and/or
   - Q at position 82, and/or
   - K at position 117, and/or
   - K at position 118, and/or
   - S at position 121.

In an embodiment, the amino acid sequence of the isolated myoglobin or preferably the recombinant myoglobin identified earlier herein comprises a sequence that has at least 70%, at least 71%, at least 72%, at least 73%, at least 74%, at least 75%, at least 76%, at least 77%, at least 78%, at least 79%, at least 80%, at least 81%, at least 82%, at least 83%, at least 84%, at least 85%, at least 86%, at least 87%, at least 88%, at least 89%, at least 90%, at least 91%, at least 92%, at least 93%, at least 94%, at least 95%, at least 96%, at least 97%, at least 98%, at least 99% or 100% identity or similarity with the SEQ ID NO: 1 in combination with at least one of the following amino acid combinations:
- M at position 10, and/or
- A at position 36, and/or
- S at position 58, and/or
- M at position 10 and A at position 36, and/or
- M at position 10 and S at position 58, and/or
- A at position 36 and S at position 58, and/or
- M at position 10 and A at position 36 and S at position 58.

In an embodiment, the amino acid sequence of the isolated myoglobin or preferably the recombinant myoglobin identified earlier herein comprises a sequence that has at least 70%, at least 71%, at least 72%, at least 73%, at least 74%, at least 75%, at least 76%, at least 77%, at least 78%, at least 79%, at least 80%, at least 81%, at least 82%, at least 83%, at least 84%, at least 85%, at least 86%, at least 87%, at least 88%, at least 89%, at least 90%, at least 91%, at least 92%, at least 93%, at least 94%, at least 95%, at least 96%, at least 97%, at least 98%, at least 99% or 100% identity or similarity with the SEQ ID NO: 2 and having an amino acid A at position 6.

In an embodiment, the amino acid sequence of the isolated myoglobin or preferably the recombinant myoglobin identified earlier herein comprises a sequence that has at least 70%, at least 71%, at least 72%, at least 73%, at least 74%, at least 75%, at least 76%, at least 77%, at least 78%, at least 79%, at least 80%, at least 81%, at least 82%, at least 83%, at least 84%, at least 85%, at least 86%, at least 87%, at least 88%, at least 89%, at least 90%, at least 91%, at least 92%, at least 93%, at least 94%, at least 95%, at least 96%, at least 97%, at least 98%, at least 99% or 100% identity or similarity with the SEQ ID NO: 3 in combination with at least one of the following amino acid combinations:
- D at position 55, and/or
- I at position 111, and/or
- E at position 114, and/or
- D at position 55 and I at position 111, and/or
- D at position 55 and E at position 114, and/or
- I at position 111 and E at position 114, and/or
- D at position 55 and I at position 111 and E at position 114.

In an embodiment, the amino acid sequence of the isolated myoglobin or preferably the recombinant myoglobin identified earlier herein comprises a sequence that has at least 70%, at least 71%, at least 72%, at least 73%, at least 74%, at least 75%, at least 76%, at least 77%, at least 78%, at least 79%, at least 80%, at least 81%, at least 82%, at least 83%, at least 84%, at least 85%, at least 86%, at least 87%, at least 88%, at least 89%, at least 90%, at least 91%, at least 92%, at least 93%, at least 94%, at least 95%, at least 96%, at least 97%, at least 98%, at least 99% or 100% identity or similarity with the SEQ ID NO: 4 or 5 and having F at position 30 and/or Q at position 65.

In an embodiment, the amino acid sequence of the isolated myoglobin or preferably the recombinant myoglobin identified earlier herein comprises a sequence that has at least 70%, at least 71%, at least 72%, at least 73%, at least 74%, at least 75%, at least 76%, at least 77%, at least 78%, at least 79%, at least 80%, at least 81%, at least 82%, at least 83%, at least 84%, at least 85%, at least 86%, at least 87%, at least 88%, at least 89%, at least 90%, at least 91%, at least 92%, at least 93%, at least 94%, at least 95%, at least 96%, at least 97%, at least 98%, at least 99% or 100% identity or similarity with the SEQ ID NO: 6 and having H at position 65 and/or position 94.

In an embodiment, the amino acid sequence of the isolated myoglobin or preferably the recombinant myoglobin identified earlier herein comprises a sequence that has at least 70%, at least 71%, at least 72%, at least 73%, at least 74%, at least 75%, at least 76%, at least 77%, at least 78%, at least 79%, at least 80%, at least 81%, at least 82%, at least 83%, at least 84%, at least 85%, at least 86%, at least 87%, at least 88%, at least 89%, at least 90%, at least 91%, at least 92%, at least 93%, at least 94%, at least 95%, at least 96%, at least 97%, at least 98%, at least 99% or 100% identity or similarity with the SEQ ID NO: 1, 2 or 3 in combination with at least one of the following amino acid combinations:
- L at position 22, and/or
- A or T at position 36, and/or
- G at position 122;
- L at position 22 and A or T at position 36, and/or
- L at position 22 and G at position 122; and/or
- A or T at position 36 and G at position 122, and/or
- L at position 22 and A or T at position 36 and G at position 122.

In an embodiment, the amino acid sequence of the isolated myoglobin or preferably the recombinant myoglobin identified earlier herein comprises a sequence that has at least 70%, at least 71%, at least 72%, at least 73%, at least 74%, at least 75%, at least 76%, at least 77%, at least 78%, at least 79%, at least 80%, at least 81%, at least 82%, at least 83%, at least 84%, at least 85%, at least 86%, at least 87%, at least 88%, at least 89%, at least 90%, at least 91%, at least 92%, at least 93%, at least 94%, at least 95%, at least 96%, at least 97%, at least 98%, at least 99% or 100% identity or similarity with the SEQ ID NO: 1 to 5, and having I at position 87.

In an embodiment, the amino acid sequence of the isolated myoglobin or preferably the recombinant myoglobin identified earlier herein comprises a sequence that has at least 70%, at least 71%, at least 72%, at least 73%, at least 74%, at least 75%, at least 76%, at least 77%, at least 78%, at least 79%, at least 80%, at least 81%, at least 82%, at least 83%, at least 84%, at least 85%, at least 86%, at least 87%, at least 88%, at least 89%, at least 90%, at least 91%, at least 92%, at least 93%, at least 94%, at least 95%, at least 96%, at least 97%, at least 98%, at least 99% or 100% identity or similarity with the SEQ ID NO: 1 or 3 and having at least one or more of the following amino acids or any combinations thereof;
- N at position 49, and/or
- E at position 54, and/or
- C at position 67, and/or
- T at position 75, and/or
- Q at position 82, and/or
- K at position 117, and/or
- K at position 118, and/or
- S at position 121.

### A pet food

Described herein, but not claimed, is a pet food obtainable by the methods described herein. This pet food comprises a myoglobin, wherein the isolated myoglobin is a rat myoglobin, a rabbit myoglobin, a mouse myoglobin, a mammoth myoglobin, a tuna myoglobin, or a combination of any two or three or four or five of said myoglobins.

All preferences and embodiments listed for the methods for preparing a pet food of the first aspect of the invention may be applied mutatis mutandis to the pet food .

For example, any specification of the sequence of the isolated myoglobin added during the method may be applied to the sequence of a myoglobin comprised in the pet food .

This is evident as the pet food is obtainable by the method of the invention.

In an embodiment, the pet food, which is preferably a meat substitute, does not comprise one or more milk proteins selected from the group consisting of β-casein, κ-casein, α-S1-casein, α-S2-casein, α-lactalbumin, β-lactoglobulin, lactoferrin and transferrin, wherein said milk protein is from a woolly mammoth. In another embodiment, the meat substitute does not comprise one or more milk proteins selected from the group consisting of β-casein, κ-casein, α-S1-casein, α-S2-casein, α-lactalbumin, β-lactoglobulin, lactoferrin and transferrin, wherein said milk protein is from a mammoth.

In an embodiment, the pet food, which is preferably a meat substitute, does not comprise one or more milk proteins selected from the group consisting of β-casein, κ-casein, α-S1-casein, α-S2-casein, α-lactalbumin, β-lactoglobulin, lactoferrin and transferrin, wherein said milk protein has not been produced by a mammal or a mammalian cell.

In a more preferred embodiment, the pet food, which is preferably a meat substitute, does not comprise a milk protein such as β-casein, κ-casein, α-S1-casein, α-S2-casein, α-lactalbumin, β-lactoglobulin, lactoferrin or transferrin, wherein said milk protein is from a woolly mammoth. In another more preferred embodiment, the meat substitute does not comprise a milk protein such as β-casein, κ-casein, α-S1-casein, α-S2-casein, α-lactalbumin, β-lactoglobulin, lactoferrin or transferrin, wherein said milk protein is from a mammoth.

In another more preferred embodiment, the pet food, which is preferably a meat substitute, does not comprise a milk protein such as β-casein, κ-casein, α-S1-casein, α-S2-casein, α-lactalbumin, β-lactoglobulin, lactoferrin or transferrin, wherein said milk protein has not been produced by a mammal or a mammalian cell.

In an embodiment, the pet food, which is preferably a meat substitute, does not comprise a κ-casein from a woolly mammoth. In a further embodiment, the meat substitute does not comprise a protein represented by a sequence having at least 90%, 91%, 92%, 93%, 94%, 95%, 96%, 97%, 98%, 99% sequence identity with SEQ ID NO: 13. In a further embodiment, the pet food, which is preferably a meat substitute, does not comprise a protein represented by SEQ ID NO: 13.

In an embodiment, the pet food, which is preferably a meat substitute, does not comprise a β-casein from a woolly mammoth. In a further embodiment, the meat substitute does not comprise a protein represented by a sequence having at least 90%, 91%, 92%, 93%, 94%, 95%, 96%, 97%, 98%, 99% sequence identity with SEQ ID NO: 14. In a further embodiment, the pet food, which is preferably a meat substitute, does not comprise a protein represented by SEQ ID NO: 14.

In an embodiment, the pet food, which is preferably a meat substitute, does not comprise a symbiotic hemoglobin which has been produced by a bacterium living in symbiosis in the root nodules of a soy plant. In an embodiment, the pet food, which is preferably a meat substitute, does not comprise a leghemoglobin. In an embodiment, the isolated myoglobin disclosed herein may be the sole source of heme-containing protein present in the meat substitute. It means the meat substitute may comprise other proteins than the isolated myoglobin as disclosed herein. Examples of proteins that may be present include soy proteins.

Within the context of the invention, a heme-containing protein as defined can refer to all proteins or protein subunits that are capable of covalently or noncovalently binding a heme moiety. Heme-containing polypeptides can transport or store oxygen. Some examples of heme-containing protein include globin, hemoglobin, leghemoglobin.

In an embodiment, the pet food, which is preferably a meat substitute, is prepared by mixing (i.e. adding) from 10% up to 40% of a protein source, from 5% up to 30% of a lipid source, from 0.1% up to 5% of NaCl, from 0.1% up to 5% of a fiber source, and from 0.1% up to 5% of an isolated myoglobin. In a more preferred embodiment, the pet food, which is preferably a meat substitute, is prepared by mixing from 20% up to 30% of a protein source, from 10% up to 20% of a lipid source, from 0.5% up to 2% of NaCl, from 0.5% up to 1.5% of a fiber source, and from 0.1% up to 3% of an isolated myoglobin.

Preferably, the protein source is texturized soy protein, pea protein isolate, fava bean protein, mung bean protein, textured wheat protein, rice protein or potato protein. In this context, texturized soy protein is a defatted soy flour product, also known as texturized vegetable protein (TVP) or soy meat, as is clear to the skilled person. Preferably, the lipid source is sunflower oil, coconut oil, canola oil or cocoa butter. Preferably, the fiber source is methylcellulose or potato starch.

In a more preferred embodiment, the pet food, which is preferably a meat substitute, is prepared by mixing from 20% up to 30% of texturized soy protein, from 10% up to 20% of sunflower oil, from 0.5% up to 2% of NaCl, from 0.5% up to 1.5% of methylcellulose, and from 0.1% up to 10% of an isolated myoglobin. Even more preferably, the weight percentage of the isolated myoglobin in the meat substitute according to the more preferred embodiment is from 0.1% up to 5%, 4.9%, 4.8%, 4.7%, 4.6%, 4.5%, 4.4%, 4.3%, 4.2%, 4.1%, 4%, 3.9%, 3.8%, 3.7%, 3.6%, 3.5%, 3.4%, 3.3%, 3.2%, 3.1%, 3%, 2.95%, 2.9%, 2.85%, 2.8%, 2.75%, 2.7%, 2.65%, 2.6%, 2.55%, 2.5%, 2.45%, 2.4%, 2.35%, 2.3%, 2.25%, 2.2%, 2.15%, 2.1%, 2.05%, 2%, 1.95%, 1.9%, 1.85%, 1.8%, 1.75%, 1.7%, 1.65%, 1.6%, 1.55%, 1.5%, 1.45%, 1.4%, 1.35%, 1.3%, 1.25%, 1.2%, 1.15%, 1.1%, 1.05%, 1%, 0.95%, 0.9%, 0.85%, 0.8%, 0.75%, 0.7%, 0.65%, 0.6%, 0.55%, or 0.5%.

In an embodiment, the pet food, which is preferably a meat substitute, is prepared by mixing from 20% up to 30% texturized soy protein, from 10% up to 20% sunflower oil, from 1% up to 2% NaCl, from 0.5% up to 1.5% methylcellulose, from 50% up to 70% water and from 0.2% up to 0.8% isolated myoglobin. In a preferred embodiment, the pet food, which is preferably a meat substitute, is prepared by mixing from 23% up to 27% texturized soy protein, from 13% up to 17% sunflower oil, from 1.25% up to 1.75% NaCl, from 0.75% up to 1.25% methylcellulose, from 55% up to 60% water and from 0.45% up to 0.55% isolated myoglobin.

In an embodiment, the pet food, which is preferably a meat substitute, is prepared by mixing 25% texturized soy protein, 15% sunflower oil, 1.5% NaCl, 1.0% methylcellulose, 57% water and 0.5% isolated myoglobin, wherein these weight percentages are rounded to two significant digits.

In an embodiment, the pet food, which is preferably a meat substitute, is prepared by mixing from 15% up to 35% texturized soy protein, from 10% up to 20% sunflower oil, from 0.5% up to 2.5% NaCl, from 0.5% up to 1.5% methylcellulose, from 50% up to 70% water and from 0.5% up to 1.5% isolated myoglobin. In a preferred embodiment, the pet food, which is preferably a meat substitute, is prepared by mixing from 22% up to 27% texturized soy protein, from 13% up to 17% sunflower oil, from 1.25% up to 1.75% NaCl, from 0.75% up to 1.25% methylcellulose, from 50% up to 60% water and from 0.75% up to 1.25% isolated myoglobin.

In an embodiment, the pet food, which is preferably a meat substitute, is prepared by mixing 25% texturized soy protein, 15% sunflower oil, 1.5% NaCl, 1.0% methylcellulose, 57% water and 1.0% isolated myoglobin, wherein these weight percentages are rounded to two significant digits.

In the meat substitutes above, % refers to a weight percentage. Insofar as the weight percentages describing the composition of a meat substitute do not add up to 100%, the addition of water to a corresponding percentage is assumed.

In an embodiment, the pet food, which is preferably a meat substitute, comprises a similar amount of bioavailable iron or heme iron as the counterpart genuine meat. In an embodiment such amount is ranged from 0.3 to 20 mg bioavailable iron or heme iron per 100 gram pet food. In an embodiment such amount is ranged from 0.1 mg up to 16.5 mg, 16.17 mg, 15.84 mg, 15.51 mg, 15.18 mg, 14.85 mg, 14.52 mg, 14.19 mg, 13.86 mg, 13.53 mg, 13.2 mg, 12.87 mg, 12.54 mg, 12.21 mg, 11.88 mg, 11.55 mg, 11.22 mg, 10.89 mg, 10.56 mg, 10.23 mg, 9.9 mg, 9.735 mg, 9.57 mg, 9.405 mg, 9.24 mg, 9.075 mg, 8.91 mg, 8.745 mg, 8.58 mg, 8.415 mg, 8.25 mg, 8.085 mg, 7.92 mg, 7.755 mg, 7.59 mg, 7.425 mg, 7.26 mg, 7.095 mg, 6.93 mg, 6.765 mg, 6.6 mg, 6.435 mg, 6.27 mg, 6.105 mg, 5.94 mg, 5.775 mg, 5.61 mg, 5.445 mg, 5.28 mg, 5.115 mg, 4.95 mg, 4.785 mg, 4.62 mg, 4.455 mg, 4.29 mg, 4.125 mg, 3.96 mg, 3.795 mg, 3.63 mg, 3.465 mg, 3.3 mg, 3.135 mg, 2.97 mg, 2.805 mg, 2.64 mg, 2.475 mg, 2.31 mg, 2.145 mg, 1.98 mg, 1.815 mg or 1.65 mg bioavailable iron or heme iron per 100 gram pet food. In another embodiment such amount is 0.3, 0.4, 0.5, 0.6, 0.7, 0.8, 0.9, 1, 1.1, 1.2, 1.3, 1.4, 1.5, 1.6, 1.7, 1.8, 1.9, 2, 2.1, 2.2, 2.3, 2.4, 2.5, 2.6, 2.7, 2.8, 2.9, 3, 3.1, 3.2, 3.3, 3.4, 3.5, 3.6, 3.7, 3.8, 3.9, 4, 4.1, 4.2, 4.3, 4.4, 4.5, 4.6, 4.7, 4.8, 4.9, 5, 5.1, 5.2, 5.3, 5.4, 5.5, 5.6, 5.7, 5.8, 5.9, 6, 6.1, 6.2, 6.3, 6.4, 6.5, 6.6, 6.7, 6.8, 6.9, 7, 7.1, 7.2, 7.3, 7.4, 7.5, 7.6, 7.7, 7.8, 7.9, 8, 8.1, 8.2, 8.3, 8.4, 8.5, 8.6, 8.7, 8.8, 8.9, 9, 9.1, 9.2, 9.3, 9.4, 9.5, 9.6, 9.7, 9.8, 9.9, 10, 10.1, 10.2, 10.3, 10.4, 10.5, 10.6, 10.7, 10.8, 10.9, 11, 11.1, 11.2, 11.3, 11.4, 11.5, 11.6, 11.7, 11.8, 11.9, 12, 12.1, 12.2, 12.3, 12.4, 12.5, 12.6, 12.7, 12.8, 12.9, 13, 13.1, 13.2, 13.3, 13.4, 13.5, 13.6, 13.7, 13.8, 13.9, 14, 14.1, 14.2, 14.3, 14.4, 14.5, 14.6, 14.7, 14.8, 14.9, 15, 15.1, 15.2, 15.3, 15.4, 15.5, 15.6, 15.7, 15.8, 15.9, 16, 16.1, 16.2, 16.3, 16.4, 16.5, 16.6, 16.7, 16.8, 16.9, 17, 17.1, 17.2, 17.3, 17.4, 17.5, 17.6, 17.7, 17.8, 17.9, 18, 18.1, 18.2, 18.3, 18.4, 18.5, 18.6, 18.7, 18.8, 18.9, 19, 19.1, 19.2, 19.3, 19.4, 19.5, 19.6, 19.7, 19.8, 19.9, or 20 mg bioavailable iron or heme iron per 100 gram pet food.

### General terms

Unless stated otherwise, all technical and scientific terms used herein have the same meaning as customarily and ordinarily understood by a person of ordinary skill in the art to which this invention belongs, and read in view of this disclosure.

In this document and in its claims, the verb "to comprise" and its conjugations is used in its non-limiting sense to mean that items following the word are included, but items not specifically mentioned are not excluded. In addition, the verb "to consist" may be replaced by "to consist essentially of" meaning that a method as described herein may comprise additional step(s) than the ones specifically identified, said additional step(s) not altering the unique characteristic of the invention. In addition, the verb "to consist" may be replaced by "to consist essentially of" meaning that a pet food, a meat substitute, an isolated myoglobin, a gene construct, a host cell (or methods) as described herein may comprise additional component(s) (or additional steps) than the ones specifically identified, said additional component(s) not altering the unique characteristic of the invention.

Reference to an element by the indefinite article "a" or "an" does not exclude the possibility that more than one of the elements is present, unless the context clearly requires that there be one and only one of the elements. The indefinite article "a" or "an" thus usually means "at least one". As used herein, with "at least" a particular value means that particular value or more. For example, "at least 2" is understood to be the same as "2 or more" i.e., 2, 3, 4, 5, 6, 7, 8, 9, 10, 11, 12, 13, 14, 15, ..., etc.

Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein. The word "about" or "approximately" when used in association with a numerical value (e.g. about 10) preferably means that the value may be the given value (of 10) more or less 0.1% of the value. As used herein, the term "and/or" indicates that one or more of the stated cases may occur, alone or in combination with at least one of the stated cases, up to with all of the stated cases.

In the context of this application, all percentages in the context of a concentration or composition referto weight percentages, unless defined otherwise. In the context of this application, expressions such as "a parameter having a value of at least X, Y or Z" should be interpreted as said parameter having a value of at least X, of at least Y, or of at least Z.

Various embodiments are described herein. Each embodiment as identified herein may be combined together unless otherwise indicated.

One skilled in the art will recognize many methods and materials similar or equivalent to those described herein, which could be used in the practice of the present invention. Indeed, the present invention is in no way limited to the methods and materials described. The present invention is further described by the following examples which should not be construed as limiting the scope of the invention.

### Sequence identity

In the context of the invention, a nucleic acid molecule such as a nucleic acid molecule encoding an isolated myoglobin is represented by a nucleic acid or nucleotide sequence which encodes a protein fragment or a polypeptide or a peptide or a derived peptide. It is to be understood that each nucleic acid molecule or protein fragment or polypeptide or peptide or derived peptide or construct as identified herein by a given sequence identity number (SEQ ID NO) is not limited to this specific sequence as disclosed. Each coding sequence as identified herein encodes a given protein fragment or polypeptide or peptide or derived peptide or construct or is itself a protein fragment or polypeptide or construct or peptide or derived peptide.

Throughout this application, each time one refers to a specific nucleotide sequence SEQ ID NO (take SEQ ID NO: X as example) encoding a given protein fragment or polypeptide or peptide or derived peptide, one may replace it by:
i. a nucleotide sequence comprising a nucleotide sequence that has at least 60% sequence identity with SEQ ID NO: X; or
ii. a nucleotide sequence the sequence of which differs from the sequence of a nucleic acid molecule of (i) due to the degeneracy of the genetic code; or
iii. a nucleotide sequence that encodes an amino acid sequence that has at least 60% amino acid identity or similarity with an amino acid sequence encoded by a nucleotide sequence SEQ ID NO: X.

Another preferred level of sequence identity or similarity is 70%. Another preferred level of sequence identity or similarity is 75%. Another preferred level of sequence identity or similarity is 80%. Another preferred level of sequence identity or similarity is 85%. Another preferred level of sequence identity or similarity is 90%. Another preferred level of sequence identity or similarity is 95%. Another preferred level of sequence identity or similarity is 99%.

Throughout this application, each time one refers to a specific amino acid sequence SEQ ID NO (take SEQ ID NO: Y as example), one may replace it by: a polypeptide represented by an amino acid sequence comprising a sequence that has at least 60% sequence identity or similarity with amino acid sequence SEQ ID NO: Y. Another preferred level of sequence identity or similarity is 70%. Another preferred level of sequence identity or similarity is 75%. Another preferred level of sequence identity or similarity is 80%. Another preferred level of sequence identity or similarity is 85%. Another preferred level of sequence identity or similarity is 90%. Another preferred level of sequence identity or similarity is 95%. Another preferred level of sequence identity or similarity is 99%.

Each nucleotide sequence or amino acid sequence described herein by virtue of its identity or similarity percentage with a given nucleotide sequence or amino acid sequence respectively has in a further preferred embodiment an identity or a similarity of at least 60%, at least 61%, at least 62%, at least 63%, at least 64%, at least 65%, at least 66%, at least 67%, at least 68%, at least 69%, at least 70%, at least 71%, at least 72%, at least 73%, at least 74%, at least 75%, at least 76%, at least 77%, at least 78%, at least 79%, at least 80%, at least 81%, at least 82%, at least 83%, at least 84%, at least 85%, at least 86%, at least 87%, at least 88%, at least 89%, at least 90%, at least 91%, at least 92%, at least 93%, at least 94%, at least 95%, at least 96%, at least 97%, at least 98%, at least 99% or 100% with the given nucleotide or amino acid sequence, respectively.

The terms "homology", "sequence identity" and the like are used interchangeably herein. Sequence identity is described herein as a relationship between two or more amino acid (polypeptide or protein) sequences or two or more nucleic acid (polynucleotide) sequences, as determined by comparing the sequences. In a preferred embodiment, sequence identity is calculated based on the full length of two given SEQ ID NO's or on a part thereof. Part thereof preferably means at least 50%, 60%, 70%, 80%, 90%, or 100% of both SEQ ID NO's. In the art, "identity" also refers to the degree of sequence relatedness between amino acid or nucleic acid sequences, as the case may be, as determined by the match between strings of such sequences. "Similarity" between two amino acid sequences is determined by comparing the amino acid sequence and its conserved amino acid substitutes of one polypeptide to the sequence of a second polypeptide. "Identity" and "similarity" can be readily calculated by known methods, including but not limited to those described in Bioinformatics and the Cell: Modern Computational Approaches in Genomics, Proteomics and transcriptomics, Xia X., Springer International Publishing, New York, 2018; and Bioinformatics: Sequence and Genome Analysis, Mount D., Cold Spring Harbor Laboratory Press, New York, 2004, each incorporated herein by reference.

"Sequence identity" and "sequence similarity" can be determined by alignment of two peptide or two nucleotide sequences using global or local alignment algorithms, depending on the length of the two sequences. Sequences of similar lengths are preferably aligned using a global alignment algorithms (e.g. Needleman-Wunsch) which aligns the sequences optimally over the entire length, while sequences of substantially different lengths are preferably aligned using a local alignment algorithm (e.g. Smith-Waterman). Sequences may then be referred to as "substantially identical" or "essentially similar" when they (when optimally aligned by for example the program EMBOSS needle or EMBOSS water using default parameters) share at least a certain minimal percentage of sequence identity (as described below).

A global alignment is suitably used to determine sequence identity when the two sequences have similar lengths. When sequences have a substantially different overall length, local alignments, such as those using the Smith-Waterman algorithm, are preferred. EMBOSS needle uses the Needleman-Wunsch global alignment algorithm to align two sequences over their entire length (full length), maximizing the number of matches and minimizing the number of gaps. EMBOSS water uses the Smith-Waterman local alignment algorithm. Generally, the EMBOSS needle and EMBOSS water default parameters are used, with a gap open penalty = 10 (nucleotide sequences) / 10 (proteins) and gap extension penalty = 0.5 (nucleotide sequences) / 0.5 (proteins). For nucleotide sequences the default scoring matrix used is DNAfull and for proteins the default scoring matrix is Blosum62 (Henikoff & Henikoff, 1992, PNAS 89, 915-919, incorporated herein by reference).

Alternatively, percentage similarity or identity may be determined by searching against public databases, using algorithms such as FASTA, BLAST, etc. Thus, the nucleic acid and protein sequences of some embodiments of the present invention can further be used as a "query sequence" to perform a search against public databases to, for example, identify other family members or related sequences. Such searches can be performed using the BLASTn and BLASTx programs (version 2.0) of Altschul, et al. (1990) J. Mol. Biol. 215:403-10, incorporated herein by reference. BLAST nucleotide searches can be performed with the NBLAST program, score = 100, wordlength = 12 to obtain nucleotide sequences homologous to oxidoreductase nucleic acid molecules of the invention. BLAST protein searches can be performed with the BLASTx program, score = 50, wordlength = 3 to obtain amino acid sequences homologous to protein molecules of the invention. To obtain gapped alignments for comparison purposes, Gapped BLAST can be utilized as described in Altschul et al., (1997) Nucleic Acids Res. 25(17): 3389-3402, incorporated herein by reference. When utilizing BLAST and Gapped BLAST programs, the default parameters of the respective programs (e.g., BLASTx and BLASTn) can be used. See the homepage of the National Center for Biotechnology Information accessible on the world wide web at www.ncbi.nlm.nih.gov/.

Optionally, in determining the degree of amino acid similarity, the skilled person may also take into account so-called conservative amino acid substitutions. As used herein, "conservative" amino acid substitutions refer to the interchangeability of residues having similar side chains. Examples of classes of amino acid residues for conservative substitutions are given in the Tables below.

| | |
|---|---|
| Acidic Residues | Asp (D) and Glu (E) |
| Basic Residues | Lys (K), Arg (R), and His (H) |
| Hydrophilic Uncharged Residues | Ser (S), Thr (T), Asn (N), and Gln (Q) |
| Aliphatic Uncharged Residues | Gly (G), Ala (A), Val (V), Leu (L), and Ile (I) |
| Non-polar Uncharged Residues | Cys (C), Met (M), and Pro (P) |
| Aromatic Residues | Phe (F), Tyr (Y), and Trp (W) |

Alternative conservative amino acid residue substitution classes:

| | | | |
|---|---|---|---|
| 1 | A | S | T |
| 2 | D | E | |
| 3 | N | Q | |
| 4 | R | K | |
| 5 | I | L | M |
| 6 | F | Y | W |

Alternative physical and functional classifications of amino acid residues:

| | |
|---|---|
| Alcohol group-containing residues | S and T |
| Aliphatic residues | I, L, V, and M |
| Cycloalkenyl-associated residues | F, H, W, and Y |
| Hydrophobic residues | A, C, F, G, H, I, L, M, R, T, V, W, and Y |
| Negatively charged residues | D and E |
| Polar residues | C, D, E, H, K, N, Q, R, S, and T |
| Positively charged residues | H, K, and R |
| Small residues | A, C, D, G, N, P, S, T, and V |
| Very small residues | A, G, and S |
| Residues involved in turn formation | A, C, D, E, G, H, K, N, Q, R, S, P and T |
| Flexible residues | Q, T, K, S, G, P, D, E, and R |

For example, a group of amino acids having aliphatic side chains is glycine, alanine, valine, leucine, and isoleucine; a group of amino acids having aliphatic-hydroxyl side chains is serine and threonine; a group of amino acids having amide-containing side chains is asparagine and glutamine; a group of amino acids having aromatic side chains is phenylalanine, tyrosine, and tryptophan; a group of amino acids having basic side chains is lysine, arginine, and histidine; and a group of amino acids having sulphur-containing side chains is cysteine and methionine. Preferred conservative amino acids substitution groups are: valine-leucine-isoleucine, phenylalanine-tyrosine, lysine-arginine, alanine-valine, and asparagine-glutamine. Substitutional variants of the amino acid sequence disclosed herein are those in which at least one residue in the disclosed sequences has been removed and a different residue inserted in its place. Preferably, the amino acid change is conservative. Preferred conservative substitutions for each of the naturally occurring amino acids are as follows: Ala to Ser; Arg to Lys; Asn to Gln or His; Asp to Glu; Cys to Ser or Ala; Gln to Asn; Glu to Asp; Gly to Pro; His to Asn or Gin; Ile to Leu or Val; Leu to Ile or Val; Lys to Arg; Gln or Glu; Met to Leu or Ile; Phe to Met, Leu or Tyr; Ser to Thr; Thr to Ser; Trp to Tyr; Tyr to Trp or Phe; and, Val to Ile or Leu.

### Proteins and amino acids

The terms "protein" or "polypeptide" or "amino acid sequence" are used interchangeably and refer to molecules consisting of a chain of amino acids, without reference to a specific mode of action, size, 3-dimensional structure or origin. In amino acid sequences as described herein, amino acids or "residues" are denoted by three-letter symbols. These three-letter symbols as well as the corresponding one-letter symbols are well known to a person of skill in the art and have the following meaning: A (Ala) is alanine, C (Cys) is cysteine, D (Asp) is aspartic acid, E (Glu) is glutamic acid, F (Phe) is phenylalanine, G (Gly) is glycine, H (His) is histidine, I (Ile) is isoleucine, K (Lys) is lysine, L (Leu) is leucine, M (Met) is methionine, N (Asn) is asparagine, P (Pro) is proline, Q (Gln) is glutamine, R (Arg) is arginine, S (Ser) is serine, T (Thr) is threonine, V (Val) is valine, W (Trp) is tryptophan, Y (Tyr) is tyrosine. A residue may be any proteinogenic amino acid, but also any non-proteinogenic amino acid such as D-amino acids and modified amino acids formed by post-translational modifications, and also any non-natural amino acid, as described herein..

### Gene or coding sequence

The term "gene" means a DNA fragment comprising a region (transcribed region), which is transcribed into an RNA molecule (e.g. an mRNA) in a cell, operably linked to suitable regulatory regions (e.g. a promoter). A gene will usually comprise several operably linked fragments, such as a promoter, a 5' leader sequence, a coding region and a 3'-nontranslated sequence (3'-end) e.g. comprising a polyadenylation- and/or transcription termination site. "Expression of a gene" refers to the process wherein a DNA region which is operably linked to appropriate regulatory regions, particularly a promoter, is transcribed into an RNA, which is biologically active, i.e. which is capable of being translated into a biologically active protein or peptide. As used herein, a "regulator" or "transcriptional regulator" is a protein that controls the rate of transcription of genetic information from DNA to messenger RNA, by binding to a specific DNA sequence.

### Promoter

As used herein, the term "promoter" or "transcription regulatory sequence" refers to a nucleic acid fragment that functions to control the transcription of one or more coding sequences, and is located upstream with respect to the direction of transcription of the transcription initiation site of the coding sequence, and is structurally identified by the presence of a binding site for DNA-dependent RNA polymerase, transcription initiation sites and any other DNA sequences, including, but not limited to transcription factor binding sites, repressor and activator protein binding sites, and any other sequences of nucleotides known to one of skill in the art to act directly or indirectly to regulate the amount of transcription from the promoter. A "constitutive" promoter is a promoter that is active under most physiological and developmental conditions. An "inducible" and/or "repressible" promoter is a promoter that is physiologically or developmentally regulated to be induced and/or repressed, e.g. by the application of a chemical inducer or repressing signal.

As used herein, the term "operably linked" refers to a linkage of polynucleotide elements in a functional relationship. A nucleic acid is "operably linked" when it is placed into a functional relationship with another nucleic acid sequence. For instance, a transcription regulatory sequence is operably linked to a coding sequence if it affects the transcription of the coding sequence. Operably linked means that the DNA sequences being linked are typically contiguous and, where necessary to join two protein encoding regions, contiguous and in reading frame. Linking can be accomplished by ligation at convenient restriction sites or at adapters or linkers inserted in lieu thereof, or by gene synthesis.

### Gene constructs and expression vectors

Gene constructs as described herein could be prepared using any cloning and/or recombinant DNA techniques, as known to a person of skill in the art, in which a nucleotide sequence encoding said isolated myoglobin is expressed in a suitable cell, *e.g.* cultured cells or cells of a multicellular organism, such as described in Ausubel et al., "Current Protocols in Molecular Biology", Greene Publishing and Wiley-Interscience, New York (1987) and in Sambrook and Russell (2001, *supra*); both of which are incorporated herein by reference in their entirety. Also see, Kunkel (1985) Proc. Natl. Acad. Sci. 82:488 (describing site directed mutagenesis) and Roberts et al. (1987) Nature 328:731-734 or Wells, J.A., et al. (1985) Gene 34: 315 (describing cassette mutagenesis).

The phrase "expression vector" or "vector" generally refers to a tool in molecular biology used to obtain gene expression in a cell, for example by introducing a nucleotide sequence that is capable of effecting expression of a gene or a coding sequence in a host compatible with such sequences.

An expression vector carries a genome that is able to stabilize and remain episomal in a cell. Within the context of the invention, a cell may mean to encompass a cell used to make the construct or a cell wherein the construct will be administered. Alternatively, a vector is capable of integrating into a cell's genome, for example through homologous recombination or otherwise.

These expression vectors typically include at least suitable promoter sequences and optionally, transcription termination signals. An additional factor necessary or helpful in effecting expression can also be used as described herein. A nucleic acid or DNA or nucleotide sequence encoding a myoglobin is incorporated into a DNA construct capable of introduction into and expression in an *in vitro* cell culture. Specifically, a DNA construct is suitable for replication in a prokaryotic host, such as bacteria, *e.g., E. coli,* or can be introduced into a cultured mammalian, plant, insect, (e.g., Sf9), yeast, fungi or other eukaryotic cell lines.

A DNA construct prepared for introduction into a particular host may include a replication system recognized by the host, an intended DNA segment encoding a desired polypeptide, and transcriptional and translational initiation and termination regulatory sequences operably linked to the polypeptide-encoding segment. The term "operably linked" has already been described herein. For example, a promoter or enhancer is operably linked to a coding sequence if it stimulates the transcription of the sequence. DNA for a signal sequence is operably linked to DNA encoding a polypeptide if it is expressed as a preprotein that participates in the secretion of a polypeptide. Generally, a DNA sequence that is operably linked are contiguous, and, in the case of a signal sequence, both contiguous and in reading frame. However, enhancers need not be contiguous with a coding sequence whose transcription they control. Linking is accomplished by ligation at convenient restriction sites or at adapters or linkers inserted in lieu thereof, or by gene synthesis.

The selection of an appropriate promoter sequence generally depends upon the host cell selected for the expression of a DNA segment. Examples of suitable promoter sequences include prokaryotic, and eukaryotic promoters well known in the art (see, e.g. Sambrook and Russell, 2001, *supra*)*.* A transcriptional regulatory sequence typically includes a heterologous enhancer or promoter that is recognised by the host. The selection of an appropriate promoter depends upon the host, but promoters such as the trp, lac and phage promoters, tRNA promoters and glycolytic enzyme promoters are known and available (see, e.g. Sambrook and Russell, 2001, *supra*). An expression vector includes the replication system and transcriptional and translational regulatory sequences together with the insertion site for the polypeptide encoding segment. In most cases, the replication system is only functional in the cell that is used to make the vector (bacterial cell as *E. Coli*). Most plasmids and vectors do not replicate in the cells infected with the vector. Examples of workable combinations of cell lines and expression vectors are described in Sambrook and Russell (2001, *supra*) and in Metzger et al. (1988) Nature 334: 31-36. For example, suitable expression vectors can be expressed in, yeast, *e.g. S. cerevisiae, e.g.,* insect cells, *e.g*., Sf9 cells, mammalian cells, *e.g*., CHO cells and bacterial cells, *e.g., E. coli.* A cell may thus be a prokaryotic or eukaryotic host cell. A cell may be a cell that is suitable for culture in liquid or on solid media. Alternatively, a host cell is a cell that is part of a multicellular organism such as a transgenic plant or animal.

For example if a bacterium (preferably E. coli) is used as host cell, the following regulatory regions may be used. A promoter suitable to be used in a bacterium is lac, trp, tac, T7, phoA, ara, xapA, cad, recA, spc, bla, P1 and P2 from rrnB ribosomal RNA operon, PL promoter from phage λ. A terminator suitable to be used in a bacterium is lac, trp, tac, T7 (used in example), phoA, ara, xapA, cad, recA, spc, bla, P1 and P2 from rrnB ribosomal RNA operon, PL terminator from phage A. A preferred promoter used is a T7 promoter and/or a preferred terminator is the T7 terminator. A preferred signal peptide for excretion is E. coli Sec-recognition peptide (SecA), E. coli Tet-recognition peptide, E. coli dsbA, E. coli phoA, E. coli pelB, E. coli MBP (maltose binding protein). A marker suitable for E coli is ampicillin. Alternatively, the proBA operon from E. coli strain K12, including its original transcription regulatory elements may be used to facilitate selection without antibiotics.

In another example, if a yeast is used as host cell, the following regulatory regions may be used. A promoter suitable to be used in yeast may be a constitutive promoter. Examples of suitable constitutive promoters include: a glycolytic promoter selected from FBA1, TPI1, PGK1, PYK1, TDH3, ENO2, HXK2, PGI1, PFK1, PFK2, GPM1 gene or a non-glycolytic promoter of the TEF2 gene. A suitable promoterto be used in yeast may be inducible. If the yeast is a *Pichia,* the methanol inducible promoter AOX1 is preferred. Otherwise the GAL1 promoter (galactose-inducible) may be used when the yeast is S. *cerevisiae.* The genes mentioned from which a promoter could be derived for a yeast as host cell could also be used to derive a terminator for the same yeast. A preferred signal peptide for excretion for *Pichia* (and *Saccharomyces*) includes: the *S*. *cerevisiae* alpha mating factor pre- pro- secretion signal peptide, the *S. cerevisiae* Ost1 signal peptide, the S. *cerevisiae* Aga2 signal peptide and fusions thereof.

In another example, if a filamentous fungus is used as host cell, the following regulatory regions may be used. The following promoters may be used: the *Aspergillus niger* glucoamylase promoter (*glaA*), the *Aspergillus nidulans* alcohol dehydrogenase promoter (*alcA*) or the *Aspergillus oryzae* taka-amylase A promoter (*amyB*), the *Aspergillus niger* alcohol dehydrogenase promoter (*acfM*), the *Trichoderma reesei* pyruvate kinase promoter (*pki*) or the *Aspergillus nidulas* glyceraldehyde-3-phosphate dehydrogenase promoter (*gpdA*)*.* The genes mentioned from which a promoter could be derived for a filamentous fungus as host cell could also be used to derive a terminator for the same filamentous fungus. A preferred signal peptide for excretion for a filamentous fungus, preferably an *Aspergillus* includes: the *Aspergillus niger* glucoamylase signal peptide (*glaA*), the *Aspergillus niger* a-galactosidase signal peptide (*AgIB*) and the *Trichoderma reesei* cellobiohydrolase I (*Cbhl*)*.* A preferred promoter and terminator for *Aspergillus* (more preferably for *Aspergillus niger*) are the glucoamylase promoter and the glucoamylase terminator of *Aspergillus niger.*

Gene constructs described herein can be placed in expression vectors. Thus, in another aspect there is provided an expression vector comprising a gene construct as described in any of the preceding embodiments.

Expression may be assessed by any method known to a person of skill in the art. For example, expression may be assessed by measuring the levels of transgene expression in the transduced tissue on the level of the mRNA or the protein by standard assays known to a person of skill in the art, such as qPCR, RNA sequencing, Northern blot analysis, Western blot analysis, mass spectrometry analysis of protein-derived peptides or ELISA. Expression may be assessed at any time after administration of the gene construct, expression vector or composition as described herein. In some embodiments herein, expression may be assessed after 1 week, 2 weeks, 3 weeks, 4, weeks, 5 weeks, 6 weeks, 7 weeks, 8 weeks, 9, weeks, 10 weeks, 11 weeks, 12 weeks, 14 weeks, 16 weeks, 18 weeks, 20 weeks, 22 weeks, 24 weeks, 28 weeks, 32 weeks, 36 weeks, 40 weeks, or more.

Suitable cell culturing methods for use in the process of producing recombinant protein are known to the skilled person, for example, in van't Riet, K. and Tramper, J., 1st edition, Basic Bioreactor Design, CRC Press, NY, 1991. Such methods include, but are not limited to, submerged fermentation in liquid media, surface fermentation on liquid media and solid-state fermentations. Cell culturing may, for example, be performed by cultivation in micro-titer plates, shake-flasks, small-scale benchtop bioreactors, medium-scale bioreactors and/or large-scale bioreactors in a laboratory and/or an industrial setting. Suitable cell culturing modes include, but are not limited to, continuous, batch and/or fed-batch fermentation as well as their combinations. Cell culturing may be performed using continuous fermentation, batch fermentation, preferably fed batch fermentation.

In the context of the invention, "culture medium", hereinafter alternately referred to as "growth medium", can be interpreted to encompass cases wherein the cultured cells are absent as well as cases wherein the cultured cells are present in the culture medium. "Culture broth" refers to the culture medium wherein the cultured cells are present. "Culture supernatant" refers to the culture medium wherein the cultured cells are absent. "Cell-free extract" refers to a cell lysate not comprising the cellular debris. Cell culturing as part of the process of the invention can be performed under conditions conducive to the production of the introduced myoglobins, which are known to the skilled person. Such conditions depend not only on the chemical composition of the culture medium but also on other process parameters including culture duration, temperature, O₂ levels in the culture broth and/or headspace, CO₂ levels in the culture broth and/or headspace, pH, ionic strength, agitation speed, hydrostatic pressure and the like. Cell culturing can take place using a culture medium comprising suitable nutrients, such as carbon and nitrogen sources and additional compounds such as inorganic salts and vitamins, using procedures known in the art (see, e. g. Bennett, W. and Lasure, L., 1st edition, More Gene Manipulations in Fungi, Academic Press, CA, 1991). Suitable growth media are available from commercial suppliers or may be prepared using published compositions that are suitable for the respective hosts (e.g. in catalogues of the Centraalbureau Voor Schimmelcultures collection (CBS) or of the American Type Culture Collection (ATCC)).

The exact composition of the growth medium and the values of culture process parameters are not critical features of the invention. Any growth medium composition may be contemplated, as long as it allows for growth of the host cell and production of the introduced myoglobins. The growth medium will typically comprise a carbon source to be used for the growth of the cultured cell. The skilled person understands that suitable carbon sources may be added externally to the growth medium or may already be present in said medium. Carbon sources may be present or added individually or in mixtures of multiple carbon sources. Examples of suitable carbon sources known in the art include simple sugars such as glucose, glycerol, maltose, sucrose, xylose, arabinose, complex sugars such as maltodextrins, hydrolysed starch, starch, molasses, and second-generation feedstocks. Second-generation feedstocks can be particularly attractive because of their lower carbon footprint. Second-generation feedstocks will typically comprise lignocellulosic material. Such material includes any lignocellulose and/or hemicellulose-based materials. Such material may be sourced from agricultural, industrial or municipal, preferably agricultural, waste streams. Examples of suitable materials include (agricultural) biomass, commercial organic matter, municipal solid waste, virgin biomass such as waste paper and garden waste, or non-virgin biomass. General forms of biomass include trees, shrubs and pastures, wheat, wheat straw, sugarcane bagasse, switchgrass, Japanese pampas grass, corn, corn stover, corn cob, canola stalk, soybean stalk, sweet corn, corn kernels, products and by-products from cereal milling (including wet milling and dry milling), such as corn, wheat, and barley, often referred to as "bran or fiber", and municipal solids. Biomass can also be grassy materials, agricultural residues, forestry residues, municipal solid waste, waste paper, and pulp and paper mill residues. Agricultural biomass includes branches, shrubs, tows, corn and corn straw, energy crops, forests, fruits, flowers, cereals, pastures, herbaceous crops, leaves, bark, needles, logs, roots, young trees, short term rotating woody crops, shrubs, switch herbs, trees, vegetables, fruits, vines, sugar beet pulp, wheat middlings, oat hulls, and hard and soft timber (not including toxic wood), and organic waste materials resulting from agricultural processes including agriculture and forestry activities, particularly forestry wood waste. Agricultural biomass may be any of the foregoing alone, or any combination or mixture thereof. Carbon sources such as organic acids, aldehydes, ketones, esters and alcohols may also be contemplated. The use of growth media comprising combinations of multiple different carbon sources may also be contemplated in the process of the invention. Such media could, as a non-limiting example, combine more oxidized carbon sources such as organic acids with more reduced carbon sources such as alcohols. Examples of suitable nitrogen sources known in the art include soy bean meal, corn steep liquor, yeast extract, whey protein, egg protein, casein hydrolysate, urea, ammonia, ammonium salts and nitrate salts. Examples of additional suitable compounds known in the art include phosphate, sulphate, metals such as magnesium, trace elements and vitamins. The exact growth medium requirements will vary based on the host cell, e.g. between yeasts, bacteria and filamentous fungi, said requirements will be known to the skilled person. Accordingly, the growth medium may be a complete (rich) medium or a minimal medium, i.e. a medium comprising only the absolutely necessary components for growth depending on the cultured host cell.

Similar to the composition of the growth medium, process parameters can be assigned any value, as long as they allow for growth of the host cell and production of the introduced myoglobins. Typically, said values will differ based on the host cell that is being cultured and will be known to the skilled person. Preferably, the process according to the invention is an oxygen-limited or aerobic process, meaning that cell culturing is performed under oxygen-limited or aerobic conditions, more preferably the process is oxygen-limited. Oxygen-limited conditions, also known as a micro-aerobic conditions, are culture conditions in which the oxygen consumption is limited by the availability of oxygen. The degree of oxygen limitation is determined by the amount and composition of the ingoing gas flow as well as the actual mixing/mass transfer properties of the fermentation equipment used. Preferably, under oxygen-limited conditions in a liquid culture, the rate of oxygen consumption is at least about 5.5 mmol/L/h, more preferably at least about 6 mmol/L/h and even more preferably at least about 7 mmol/L/h. Aerobic conditions are culture conditions in which the oxygen consumption is not limited by the availability of oxygen.

Cell culturing may be performed at a temperature value that is optimal for the cell, typically at a temperature range of 16-42 °C. In some embodiments, the temperature ranges between 20-40 °C, more preferably between 25-38 °C, most preferably between 28-36 °C. In some most preferred embodiments, a temperature value of about 30 or 36 °C is used.

Cell culturing may be performed at a pH value that is optimal for the cell. In some embodiments, the culture pH value is about pH 2.5, about pH 3.0, about pH 3.5, about pH 4.0, about pH 4.5, about pH 5, about pH 5.5, about pH 6, about pH 6.5, about pH 7, about pH 7.5, about pH 8.0, about pH 8.5, about pH 9. In preferred embodiments, the pH ranges from about pH 3.0 to about pH 9, more preferably from about pH 3.5 to pH 7. In some most preferred embodiments, a pH value of about 6 is used.

Cell culturing may be performed at an ionic strength value of the culture medium that is optimal for the cell, typically at a range between 50 mM - 2 M. In some embodiments, the ionic strength of the culture medium ranges between 75 mM - 1 M, more preferably between 100 mM - 750 mM. In some most preferred embodiments, an ionic strength value of about 100 mM is used.

### Overview of the sequence listing

| Protein | SEQ ID NO protein | SEQ ID NO coding nucleic acid |
|---|---|---|
| Rat myoglobin | 1 | 7 |
| Rabbit myoglobin | 2 | 8 |
| Mouse myoglobin | 3 | 9 |
| Steppe mammoth myoglobin | 4 | 10 |
| Woolly mammoth myoglobin | 5 | 11 |
| Tuna myoglobin | 6 | 12 |
| Woolly mammoth κ-casein | 13 | |
| Woolly mammoth β-casein | 14 | |

### Detailed sequences

- SEQ ID NO:1 Rat myoglobin
- SEQ ID NO:2 Rabbit myoglobin
- SEQ ID NO:3 Mouse myoglobin
- SEQ ID NO:4 Steppe mammoth myoglobin
- SEQ ID NO:5 Woolly mammoth myoglobin
- SEQ ID NO:6 Tuna myoglobin
- SEQ ID NO:7 Rat myoglobin nucleic acid
- SEQ ID NO:8 Rabbit myoglobin nucleic acid
- SEQ ID NO:9 Mouse myoglobin nucleic acid
- SEQ ID NO:10 Steppe mammoth myoglobin nucleic acid
- SEQ ID NO:11 Woolly mammoth myoglobin nucleic acid
- SEQ ID NO:12 Tuna myoglobin nucleic acid
- SEQ ID NO:13 Woolly mammoth κ-casein
- SEQ ID NO:14 Woolly mammoth β-casein

### Example

By way of example and not limitation, the following non-limiting examples are illustrative of various embodiments provided by the present disclosure.

### Example 1 production of a dog food comprising isolated rabbit myoglobin

*Production of purified rabbit myoglobin by Escherichia coli.*

Full length rabbit myoglobin gene SEQ ID NO: 2 is synthesized and cloned in a modified pET-23a(+) vector, comprising the T7 promoter and terminator and a C-terminal hexa His-tag (Genscript Biotech, Leiden, the Netherlands). The *ampR* marker gene originally present in said vector is replaced by the *proBA* operon from E. *coli* strain K12, including its original transcription regulatory elements, to facilitate selection without antibiotics. The correctly assembled plasmids are confirmed by PCR and used to transform a proline auxotrophic E. *coli* protein production strain (*E*. *coli* K12 *ΔproBA*). Transformed strains are incubated overnight in shake-flasks containing minimal medium (10.5 g/L K₂HPO₄, 4.5 g/L KH₂PO₄, 1.0 g/L (NH₄)₂SO₄, 0.12 g/L MgSO4, 0.5 g/l Nacitrate, 2 g/L glucose, and 5.0 mg/L thiamine.HClat 37°C and 150 rpm (pH 6). 500 µl of the overnight culture is transferred to a 1 L shake-flask containing 500 mL minimal medium and incubated at 37°C and 150 rpm, until an OD600 of 0.4-1 is reached. IPTG (isopropyl-β-D-thiogalactoside) at a concentration of 100 µM is added to the culture, after which the culture is incubated for 24 h at 16°C and 150 rpm. The culture is harvested and centrifuged at 3500 × g (4°C) for 15 min. The supernatant is discarded and the pellet is dissolved in 50 mL BugBuster Protein Extraction Reagent (Novagen), containing 1 KU Lysozyme/ml (Sigma-Aldrich), 25 U Benzonase^{®} Nuclease and cOmplete^{™}, EDTA-free Protease Inhibitor Cocktail (Roche). The dissolved pellet is incubated for 30 min at 4°C in a shaker. The centrifugation step is repeated and the cell-free extract (supernatant) is collected and assayed by SDS-PAGE to confirm the production of myoglobins. The production of rabbit myoglobins by the respective transformed strains is confirmed by the presence of protein bands of the correct size.

For purification, the cell-free extracts containing the soluble fraction of proteins is loaded to a HisTrap FF 1mL column (Cytiva, MA, USA), coupled with an AKTA start system. The column is equilibrated with 20 mM HEPES, 0.4 M NaCl, and 20 mM imidazole, pH 7.5, 1 mL/min flow rate. The protein is eluted with 20 mM HEPES, 0.4 M NaCl, and 400 mM imidazole, pH 7.5. The fractions containing the rabbit myoglobins are pooled, concentrated and confirmed by SDS-PAGE and Western Blotting using an anti-histidine tag antibody (Bio-Rad), which confirm the successful purification of all myoglobins. The purified rabbit myoglobins are stored at -20°C for later use.

### Production of pet food

100 kg of dry dog food control product was prepared with ingredients in the proportions shown in table 1. The ingredients for the dry basal were weighed and placed into mixer. These were blended and milled with a hammer-mill and conveyed to a holding bin.

**Table 1 dog food recipe**

| Ingredient | kg |
|---|---|
| Whole cereal grains | 430 |
| Vegetable | 35 |
| Egg | 8 |
| Minerals premix | 11 |
| Vitamina premix | 5,5 |
| Potassium Sorbate | 4 |
| Fish oil | 7 |
| Isolated rabbit myoglobin | 70 |

The dry basal mix was fed to a extruder at 250 kg/hr and the fish oil at 2.4 kg/hr. Water (10 L/hr) and steam (27 L/hr) was added to the ingredient mix in the extruder barrel. The extruder screw speed was 900 rpm and conditions of the molten mass maintained at 20 bars and at least 104° C. As the ropes of expanded mass exited the extruder dies, they were cut into kibbles by knives rotating at 900 rpm across the face of the dies. The kibbles were fed into a drier and dried at 125°C for 21 minutes to a moisture content of 9.2%. The coated kibbles were tumbled for an additional 5 minutes after all the liquids were sprayed.

A small amount of the kibbles are sampled for color stability, aromatic and nutritional analysis. The coated kibbles were then filled into poly bags and sealed.

### Example 2 production of home made cat food comprising isolated rat myoglobin

1 kg of homemade cat food product was prepared with ingredients in the proportions shown in Table 2. The ingredients were weighed and placed into a mixer. These were blended with a blender. After the mix is blended, isolated myoglobin is added to the mix, and blended for another 2 mins. The isolated myoglobin in power shape is measured with a home balance. Alternatively, if the isolate myoglobin is in cube shape, each cube is 10g, then 5 cubes are added to the mix, followed by additional 2 mins of blending. The mix is then placed in a mould, and baked for 30 min at 180°C in an oven. The mix may also be further processed into a drier to a moisture content of about 10%.

**Table 2. home made cat food recipe**

| Ingredient | g |
|---|---|
| Whole cereal grains | ∼ 700 |
| Vegetable | ∼ 250 |
| Egg | 50 |
| Minerals premix | 10 |
| Vitamina premix | 5 |
| Fish oil | 5 |
| isolated rat myoglobin | 50 |

It is possible to modify the ingredients, and alternative types of ingredients may be added. The vegetable may include spinach, lettuce, kale, lentils, peas, chickpeas, or beans. The cereals may include rice, corn, barley, oats, wheat. Tubers may include potatoes, sweet potatoes. Sprouts may include soy, lentils, rye, sesame. Flowers may include artichokes, broccoli, cauliflower. Stems may include celery, asparagus. Seeds may include pumpkin, sunflower.

## Claims

1. A method for preparing a pet food, wherein the method comprises adding an isolated myoglobin, wherein the isolated myoglobin is a rat myoglobin, a rabbit myoglobin, a mouse myoglobin, a mammoth myoglobin or a tuna myoglobin.

2. A method according to claim 1, wherein the isolated myoglobin is not comprised in a cell or a tissue before the addition.

3. A method for preparing a pet food according to claim 1 or 2, wherein the isolated myoglobin is added as part of a composition, wherein the weight fraction of the isolated myoglobin in the protein fraction comprised in the composition is at least 75%.

4. A method for preparing a pet food according to any one of the preceding claims, wherein the weight concentration of heme-proteins in the pet food is at least 1%, and wherein the weight fraction of myoglobin in the heme-proteins is at least 50%.

5. A method for preparing a pet food according to claim to any one of the preceding claims, wherein the pet is a carnivore.

6. A method for preparing a pet food according to to any one of the preceding claims, wherein the pet is a dog or a cat.

7. A method for preparing a pet food according to any one of the preceding claims, wherein the pet food is a dry pet food, a semi-moist pet food, a wet pet food, or any combination of these types of pet foods.

8. A method for preparing a pet food according to any one of the preceding claims, wherein the pet food is a meat substitute.

9. A method for preparing a pet food according to claim 8, wherein the meat substitute is a cell-based meat substitute, a cultured meat substitute or a plant-based meat substitute.

10. A method for preparing a pet food according to claim 8 or 9, wherein the meat substitute mimics the aspect, form, structure, composition, palatability, flavor, texture, color, aroma, appearance and/or nutritional value of meat.

11. A method for preparing a pet food according to any one of the preceding claims, wherein the isolated myoglobin is a recombinant myoglobin obtained from fermentation by a microorganism which has been genetically modified to express the recombinant myoglobin.

12. A method for preparing a pet food according to claim 10, wherein the microorganism is a bacterium, a yeast, a filamentous fungus or a cultured mammalian cell line, preferably Escherichia coli or Saccharomyces cerevisiae.

13. A method for preparing a pet food according to any one of the preceding claims, wherein the isolated myoglobin is represented by one of the following amino acid sequences:
a) a sequence having at least 90% sequence identity with SEQ ID NO: 1, and having at least one of the following amino acid combinations:
- M at position 10, and/or
- A at position 36, and/or
- S at position 58, and/or
- M at position 10 and A at position 36, and/or
- M at position 10 and S at position 58, and/or
- A at position 36 and S at position 58, and/or
- M at position 10 and A at position 36 and S at position 58;
b) a sequence having at least 90% sequence identity with SEQ ID NO: 2, and having an amino acid A at position 6;
c) a sequence having at least 90% sequence identity with SEQ ID NO: 3, and having at least one of the following amino acid combinations:
- D at position 55, and/or
- I at position 111, and/or
- E at position 114, and/or
- D at position 55 and I at position 111, and/or
- D at position 55 and E at position 114, and/or
- I at position 111 and E at position 114, and/or
- D at position 55 and I at position 111 and E at position 114;
d) a sequence having at least 90% identity with SEQ ID NO: 4 or 5, and having F at position 30 and/or Q at position 65;
e) a sequence having at least 90% identity with SEQ ID NO: 6, and having H at position 65 and/or position 94;
f) a sequence having at least 90% identity with SEQ ID NO: 1, 2 or 3, and having at least one of the following amino acid combinations;
- L at position 22, and/or
- A or T at position 36, and/or
- G at position 122;
- L at position 22 and A or T at position 36, and/or
- L at position 22 and G at position 122; and/or
- A or T at position 36 and G at position 122, and/or
- L at position 22 and A or T at position 36 and G at position 122;
g) a sequence having at least 90% identity with any one of SEQ ID NO: 1 to 5, and having I at position 87,
h) having at least 90% identity with SEQ ID NO: 1 or 3, and having at least one or more of the following amino acids or any combinations thereof;
- N at position 49, and/or
- E at position 54, and/or
- C at position 67, and/o
- T at position 75, and/or
- Q at position 82, and/or
- K at position 117, and/or
- K at position 118, and/or
- S at position 121,
i) having at least 90% identity with SEQ ID NO: 4, , and having at least one of the following amino acid combinations;
- H at position 92, and/or
- H at position 92 and F at position 30, and/or
- H at position 92 and Q at position 65, and/or;
- H at position 92 and F at position 30 and Q at position 65.

14. A method for preparing a pet food according to any one of the preceding claims, wherein the isolated myoglobin is represented by any one of SEQ ID NO: 1 to 6, preferably by SEQ ID NO: 1 or 2.

## Patentansprüche

1. Verfahren zum Herstellen eines Haustierfuttermittels, wobei das Verfahren das Hinzufügen eines isolierten Myoglobins umfasst, wobei das isolierte Myoglobin ein Ratten-Myoglobin, ein Kaninchen-Myoglobin, ein Maus-Myoglobin, ein Mammut-Myoglobin oder ein Thunfisch-Myoglobin ist.

2. Verfahren nach Anspruch 1, wobei das isolierte Myoglobin vor der Hinzufügung nicht in einer Zelle oder einem Gewebe enthalten ist.

3. Verfahren zum Herstellen eines Haustierfuttermittels nach Anspruch 1 oder 2, wobei das isolierte Myoglobin als Teil einer Zusammensetzung hinzugefügt wird, wobei der Gewichtsanteil des isolierten Myoglobins an der in der Zusammensetzung enthaltenen Proteinfraktion mindestens 75 % beträgt.

4. Verfahren zum Herstellen eines Haustierfuttermittels nach einem der vorhergehenden Ansprüche, wobei die Gewichtskonzentration von Häm-Proteinen in dem Haustierfuttermittel mindestens 1 % beträgt und wobei der Gewichtsanteil von Myoglobin an den Häm-Proteinen mindestens 50 % beträgt.

5. Verfahren zum Herstellen eines Haustierfuttermittels nach einem der vorhergehenden Ansprüche, wobei das Haustier ein Fleischfresser ist.

6. Verfahren zum Herstellen eines Haustierfuttermittels nach einem der vorhergehenden Ansprüche, wobei das Haustier ein Hund oder eine Katze ist.

7. Verfahren zum Herstellen eines Haustierfuttermittels nach einem der vorhergehenden Ansprüche, wobei das Haustierfuttermittel ein trockenes Haustierfuttermittel, ein halbfeuchtes Haustierfuttermittel, ein feuchtes Haustierfuttermittel oder eine Kombination dieser Arten von Haustierfuttermitteln ist.

8. Verfahren zum Herstellen eines Haustierfuttermittels nach einem der vorhergehenden Ansprüche, wobei das Haustierfuttermittel ein Fleischersatz ist.

9. Verfahren zum Herstellen eines Haustierfuttermittels nach Anspruch 8, wobei der Fleischersatz ein zellbasierter Fleischersatz, ein kultivierter Fleischersatz oder ein pflanzlicher Fleischersatz ist.

10. Verfahren zum Herstellen eines Haustierfuttermittels nach Anspruch 8 oder 9, wobei der Fleischersatz den Aspekt, die Form, die Struktur, die Zusammensetzung, die Schmackhaftigkeit, den Geschmack, die Textur, die Farbe, das Aroma, das Aussehen und/oder den Nährwert von Fleisch nachahmt.

11. Verfahren zum Herstellen eines Haustierfuttermittels nach einem der vorhergehenden Ansprüche, wobei das isolierte Myoglobin ein rekombinantes Myoglobin ist, das durch Fermentation durch einen Mikroorganismus gewonnen wird, der gentechnisch verändert wurde, um das rekombinante Myoglobin zu exprimieren.

12. Verfahren zum Herstellen eines Haustierfuttermittels nach Anspruch 10, wobei der Mikroorganismus ein Bakterium, eine Hefe, ein Fadenpilz oder eine kultivierte Säugetierzelllinie ist, vorzugsweise Escherichia coli oder Saccharomyces cerevisiae.

13. Verfahren zum Herstellen eines Haustierfuttermittels nach einem der vorhergehenden Ansprüche, wobei das isolierte Myoglobin durch eine der folgenden Aminosäuresequenzen dargestellt wird:
a) eine Sequenz mit mindestens 90 % Sequenzidentität mit SEQ ID Nr: 1 und mit mindestens einer der folgenden Aminosäurekombinationen:
- M an Position 10, und/oder
- A an Position 36, und/oder
- S an Position 58, und/oder
- M an Position 10 und A an Position 36, und/oder
- M an Position 10 und S an Position 58, und/oder
- A an Position 36 und S an Position 58, und/oder
- M an Position 10 und A an Position 36 und S an Position 58;
b) eine Sequenz mit mindestens 90 % Sequenzidentität mit SEQ ID Nr: 2 und mit einer Aminosäure A an Position 6;
c) eine Sequenz mit mindestens 90 % Sequenzidentität mit SEQ ID Nr: 3 und mit mindestens einer der folgenden Aminosäurekombinationen:
- D an Position 55, und/oder
- I an Position 111, und/oder
- E an Position 114, und/oder
- D an Position 55 und I an Position 111, und/oder
- D an Position 55 und E an Position 114, und/oder
- I an Position 111 und E an Position 114, und/oder
- D an Position 55 und I an Position 111 und E an Position 114;
d) eine Sequenz mit mindestens 90 % Identität mit SEQ ID Nr: 4 oder 5 und mit F an Position 30 und/oder Q an Position 65;
e) eine Sequenz mit mindestens 90 % Identität mit SEQ ID Nr: 6 und mit H an Position 65 und/oder Position 94;
f) eine Sequenz mit mindestens 90 % Identität mit SEQ ID Nr: 1, 2 oder 3 und mit mindestens einer der folgenden Aminosäurekombinationen;
- L an Position 22, und/oder
- A oder T an Position 36, und/oder
- G an Position 122;
- L an Position 22 und A oder T an Position 36, und/oder
- L an Position 22 und G an Position 122; und/oder
- A oder T an Position 36 und G an Position 122, und/oder
- L an Position 22 und A oder T an Position 36 und G an Position 122;
g) eine Sequenz mit mindestens 90 % Identität mit einer der SEQ ID Nr: 1 bis 5 und mit I an Position 87,
h) mit mindestens 90 % Identität mit SEQ ID Nr: 1 oder 3 und mit mindestens einer oder mehreren der folgenden Aminosäuren oder Kombinationen davon;
- N an Position 49, und/oder
- E an Position 54, und/oder
- C an Position 67, und/oder
- T an Position 75, und/oder
- Q an Position 82, und/oder
- K an Position 117, und/oder
- K an Position 118, und/oder
- S an Position 121,
i) mit mindestens 90 % Identität mit SEQ ID Nr: 4 und mit mindestens einer der folgenden Aminosäurekombinationen;
- H an Position 92, und/oder
- H an Position 92 und F an Position 30, und/oder
- H an Position 92 und Q an Position 65, und/oder;
- H an Position 92 und F an Position 30 und Q an Position 65.

14. Verfahren zum Herstellen eines Haustierfuttermittels nach einem der vorhergehenden Ansprüche, wobei das isolierte Myoglobin durch eine der SEQ ID Nr: 1 bis 6 dargestellt wird, vorzugsweise durch SEQ ID Nr: 1 oder 2.

## Revendications

1. Procédé de préparation d'aliments pour animaux, où le procédé comprend l'ajout d'une myoglobine isolée, où la myoglobine isolée est une myoglobine de rat, une myoglobine de lapin, une myoglobine de souris, une myoglobine de mammouth ou une myoglobine de thon.

2. Procédé selon la revendication 1, où la myoglobine isolée n'est pas comprise dans une cellule ou un tissu avant l'ajout.

3. Procédé de préparation d'aliments pour animaux selon la revendication 1 ou 2, où la myoglobine isolée est ajoutée en tant que partie d'une composition, où la fraction pondérale de la myoglobine isolée dans la fraction protéique comprise dans la composition est d'au moins 75 %.

4. Procédé de préparation d'aliments pour animaux selon l'une quelconque des revendications précédentes, où la concentration pondérale de protéines hème dans l'aliment pour animaux est d'au moins 1%, et où la fraction pondérale de la myoglobine dans les protéines hème est d'au moins 50 %.

5. Procédé de préparation d'aliments pour animaux selon l'une quelconque des revendications précédentes, où l'animal est un carnivore.

6. Procédé de préparation d'aliments pour animaux selon l'une quelconque des revendications précédentes, où l'animal est un chien ou un chat.

7. Procédé de préparation d'aliments pour animaux selon l'une quelconque des revendications précédentes, où l'aliment pour animaux est un aliment pour animaux sec, un aliment pour animaux semi-humide, un aliment pour animaux humide ou toute combinaison de ces types d'aliments pour animaux.

8. Procédé de préparation d'aliments pour animaux selon l'une quelconque des revendications précédentes, où l'aliment pour animaux est un substitut de viande.

9. Procédé de préparation d'aliments pour animaux selon la revendication 8, où le substitut de viande est un substitut de viande à base de cellules, un substitut de viande cultivé ou un substitut de viande à base de plantes.

10. Procédé de préparation d'aliments pour animaux selon la revendication 8 ou 9, où le substitut de viande imite l'aspect, la forme, la structure, la composition, la palatabilité, la saveur, la texture, la couleur, l'arôme, l'apparence et/ou la valeur nutritionnelle de la viande.

11. Procédé de préparation d'aliments pour animaux selon l'une quelconque des revendications précédentes, où la myoglobine isolée est une myoglobine recombinante obtenue par fermentation par un micro-organisme qui a été génétiquement modifié pour exprimer la myoglobine recombinante.

12. Procédé de préparation d'aliments pour animaux selon la revendication 10, où le micro-organisme est une bactérie, une levure, un champignon filamenteux ou une lignée cellulaire de mammifère cultivée, de préférence Escherichia coli ou Saccharomyces cerevisiae.

13. Procédé de préparation d'aliments pour animaux selon l'une quelconque des revendications précédentes, où la myoglobine isolée est représentée par l'une des séquences d'acides aminés suivantes :
a) une séquence ayant au moins 90 % d'identité de séquence avec SEQ ID NO : 1, et ayant au moins l'une des combinaisons d'acides aminés suivantes :
- M en position 10, et/ou
- A en position 36, et/ou
- S en position 58, et/ou
- M en position 10 et A en position 36, et/ou
- M en position 10 et S en position 58, et/ou
- A en position 36 et S en position 58, et/ou
- M en position 10 et A en position 36 et S en position 58 ;
b) une séquence ayant au moins 90 % d'identité de séquence avec SEQ ID NO : 2, et ayant un acide aminé A en position 6 ;
c) une séquence ayant au moins 90 % d'identité de séquence avec SEQ ID NO : 3, et ayant au moins l'une des combinaisons d'acides aminés suivantes :
- D en position 55, et/ou
- I en position 111, et/ou
- E en position 114, et/ou
- D en position 55 et I en position 111, et/ou
- D en position 55 et E en position 114, et/ou
- I en position 111 et E en position 114, et/ou
- D en position 55 et I en position 111 et E en position 114 ;
d) une séquence ayant au moins 90 % d'identité avec SEQ ID NO : 4 ou 5, et ayant F en position 30 et/ou Q en position 65 ;
e) une séquence ayant au moins 90 % d'identité avec SEQ ID NO : 6, et ayant H en position 65 et/ou en position 94 ;
f) une séquence ayant au moins 90 % d'identité avec SEQ ID NO : 1, 2 ou 3, et ayant au moins l'une des combinaisons d'acides aminés suivantes ;
- L en position 22, et/ou
- A ou T en position 36, et/ou
- G en position 122 ;
- L en position 22 et A ou T en position 36, et/ou
- L en position 22 et G en position 122 ; et/ou
- A ou T en position 36 et G en position 122, et/ou
- L en position 22 et A ou T en position 36 et G en position 122 ;
g) une séquence ayant au moins 90 % d'identité avec l'une quelconque des SEQ ID NO : 1 à 5, et ayant I en position 87,
h) ayant au moins 90 % d'identité avec SEQ ID NO : 1 ou 3, et ayant au moins l'un ou plusieurs des acides aminés suivants ou toute combinaison de ceux-ci ;
- N en position 49, et/ou
- E en position 54, et/ou
- C en position 67, et/ou
- T en position 75, et/ou
- Q en position 82, et/ou
- K en position 117, et/ou
- K en position 118, et/ou
- S en position 121,
i) ayant au moins 90 % d'identité avec SEQ ID NO : 4, et ayant au moins l'une des combinaisons d'acides aminés suivantes ;
- H en position 92, et/ou
- H en position 92 et F en position 30, et/ou
- H en position 92 et Q en position 65, et/ou ;
- H en position 92 et F en position 30 et Q en position 65.

14. Procédé de préparation d'aliments pour animaux selon l'une quelconque des revendications précédentes, où la myoglobine isolée est représentée par l'une quelconque des SEQ ID NO : 1 à 6, de préférence par SEQ ID NO : 1 ou 2.
